(19) Europäisches Patentamt
European Patent Office
Office européen des brevets

(11) Veröffentlichungsnummer : **0 432 096 A1**

(12) **EUROPÄISCHE PATENTANMELDUNG**

(21) Anmeldenummer : **90810923.4**

(22) Anmeldetag : **27.11.90**

(51) Int. Cl.$^5$ : **C08K 5/00,** C08J 9/10, C08L 57/08, // (C08K5/00, 5:3435, 5:09)

(30) Priorität : **06.12.89 CH 4366/89**

(43) Veröffentlichungstag der Anmeldung : **12.06.91 Patentblatt 91/24**

(84) Benannte Vertragsstaaten : **BE CH DE FR GB IT LI**

(71) Anmelder : **CIBA-GEIGY AG**
**Klybeckstrasse 141**
**CH-4002 Basel (CH)**

(72) Erfinder : **Hartmann, Olaf-René, Dr.**
**Hofgartenstrasse 21**
**W-6140 Bensheim 2 (DE)**
Erfinder : **Grossmann, Horst**
**An der Ziegelhütte 5**
**W-6101 Modautal 1 (DE)**

(54) **Stabilisierte chlorhaltige Zusammensetzung.**

(57) Zusammensetzungen, enthaltend
a) wenigstens ein chlorhaltiges Polymerisat
b) wenigstens ein Treibmittel oder Schäumungsmittel
c) wenigstens ein sterisch gehindertes Amin und
d) wenigstens eine Zink-, Calcium/Zink- und/oder Barium/Zink-Verbindung,
sowie die geschäumten Gegenstände, erhältlich durch das Aufschäumen der Zusammensetzungen, weisen eine gute Thermostabilität auf.

EP 0 432 096 A1

# STABILISIERTE CHLORHALTIGE ZUSAMMENSETZUNG

Die Erfindung betrifft stabilisierte verschäumbare chlorhaltige Polymerzusammensetzungen und die daraus erhältlichen Schaumstoffe.

Es ist bekannt, dass chlorhaltige Polymere bereits bei mässiger thermischer Belastung zu Verfärbungen neigen und deshalb nur mit Zusatz von Stabilisatoren thermoplastisch verarbeitet werden können. Während basische Zusätze wie organische Amine im allgemeinen die Verfärbungen verstärken sind neuerdings spezielle sterisch gehinderte Amine bekannt geworden, die sowohl als Lichtschutzmittel wie als thermische Stabilisatoren wirken können, wie dies z.B. in der JP-A 82/168 933 oder JP-A 86/163 965 beschrieben ist.

Bei der Herstellung von Schaumstoffen aus chlorhaltigen Polymeren ist die Gefahr der Verfärbung besonders hoch wegen der hohen Verschäumungstemperaturen und wegen oft anwesender basischer Schäumungsmittel oder Katalysatoren (Kicker). Es wurde überraschend gefunden, dass auch für die Herstellung von Schaumstoffen aus chlorhaltigen Polymeren solche sterisch gehinderten Amine verwendet werden können, wenn ausserdem bestimmte Thermostabilisatoren oder Costabilisatoren eingesetzt werden. Die gehinderten Amine wirken im Schaumstoff nicht nur als Lichtschutzmittel sondern auch als sogenannte Langzeit-Stabilisatoren bei thermischer Belastung.

Erfindungsgemäss wird das mit Zusammensetzungen erreichet, enthaltend

a) wenigstens ein chlorhaltiges Polymerisat

b) wenigstens ein Treibmittel oder Schäumungsmittel

c) wenigstens ein sterisch gehindertes Amin und

d) wenigstens eine Zink-, Calcium-/Zink- und/oder Barium-/Zink-Verbindung.

Die erfindungsgemässen Zusammensetzungen können als chlorhaltiges Polymerisat beispielsweise enthalten :

Polymere des Vinylchlorides, Vinylharze, enthaltend Vinylchlorideinheiten in deren Struktur, wie Copolymere des Vinylchlorids und Vinylester von aliphatischen Säuren, insbesondere Vinylacetat, Copolymere des Vinylchlorids mit Estern der Acryl- und Methycrylsäure und mit Acrylnitril, Copolymere des Vinylchlorids mit Dienverbindungen und ungesättigten Dicarbonsäuren oder deren Anhydride, wie Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenechlorids mit ungesättigten Aldehyden, Ketonen und anderen, wie Acrolein, Crotonaldehyd, Vinylmethylketon, Vinylmethylether, Vinylisobutylether und ähnliche ; Polymere des Vinylidenchlorids und Copolymere desselben mit Vinylchlorid und anderen polymerisierbaren Verbindungen ; Polymere des Vinylchloracetates und Dichlordivinylethers ; chlorierte Polymere des Vinylacetates, chlorierte polymerische Ester der Acrylsäure und der alpha-substituierten Acrylsäure ; Polymere von chlorierten Styrolen, zum Beispiel Dichlorstyrol ; chlorierte Gummis ; chlorierte Polymere des Ethylens ; Polymere und nachchlorierte Polymere von Chlorbutadien und deren Copolymere mit Vinylchlorid, Gummi-Hydrochlorid und chloriertes Gummi-Hydrochlorid ; sowie Mischungen der genannten Polymere unter sich oder mit anderen polymerisierbaren Verbindungen.

Ferner sind umfasst die Pfropfpolymerisate von PVC mit EVA, ABS und MBS. Bevorzugte Substrate sind auch Mischungen der vorstehend genannten Homo- und Copolymerisate, insbesondere Vinylchlorid-Homopolymerisate, mit anderen thermoplastischen oder/und elastomeren Polymeren, insbesondere Blends mit ABS, MBS, NBR, SAN, EVA, CPE, MBAS, PMA, PMMA, EPDM, Polylactonen und Nitrilkautschuk.

Als chlorhaltiges Polymerisat ist Polyvinylchlorid besonders bevorzugt, insbesondere Suspensionspolymerisat, Emulsionspolymerisat und Massepolymerisat.

Zur Erzielung von schaumförmigen Gegenständen oder aufgeschäumten Gegenständen aus der erfindungsgemässen Zusammensetzung sind verschiedene an sich bekannte Verfahren geeignet.

Die Zusammensetzungen lassen sich durch fein verteilte Gase aufschäumen, wobei verschiedene Begasungsarten angewendet werden können.

Beispielsweise permanente Gase, meist Stickstoff, können z.B. unter ca. 200 bar Druck in PVC-Schmelzen inkorporiert werden. Zum Aufschäumen werden z.B. in einem Zweistufenverfahren die in einer Pressform unter Druck gekühlten Formteile freiliegend aufgeheizt.

Beispielsweise werden Weichschäume auch aus entsprechenden Plastisolen, demnach Gemischen aus Polymerisaten und Weichmachern, mit grenzflächenaktiven Schäummittel-Zusätzen und Druckluft oder $CO_2$ als Treibgas resp. Schäummittel, beispielsweise durch kontinuierliche Extrusion, hergestellt.

Andere Verfahren verwenden physikalische Treibmittel, wie leicht verdampfende Kohlenwasserstoffe, z.B. Pentan bis Heptan, Chlorkohlenwasserstoffe, Methylchlorid, Methylenchlorid, Trichlorethylen oder Chlor-Fluor-Alkane. Beispielsweise werden die physikalischen Treibmittel in den Rohstoffen oder Vorprodukten gelöst oder unter Druck während der Verarbeitung zugeführt. Die Bildung von geschlossenen Poren kann durch Vernetzen

gefördert werden.

An sich bekannt sind auch chemische Treibmittel. Dies sind Substanzen, die sich bei höheren Temperaturen unter Bildung inerter Gase zersetzen. Es handelt sich dabei um anorganische Treibmittel, wie $NaHCO_3$ oder um organische Treibmittel, wie z.B. um Azo-Verbindungen, N-Nitrosoverbindunen und Sulfonylhydrazide, beispielsweise mit Anspringtemperaturen zwischen 90 und 275°C, wobei pro Gramm 100 bis 300 ml Stickstoff abgespalten werden.

Beispiele solcher Treibmittel sind Azodicarbonamid ; modifiziertes Azodicarbonamid ; 4,4'-Oxibis(benzolsulfohydrazid), Diphenylsulfon-3,3'-disulfohydrazid, Diphenylenoxid-4,4'-disulfohydrazid ; Trihydrazinotriazin; p-Toluylensulfonylsemicarbazid ; 5-Phenyltetrazol und Isatosäureanhydrid. Besonders bevorzugt ist Azodicarbonamid als Treibmittel, beispielsweise mit einer Anspringtemperatur von 200-235°C oder einer herabgesetzten Anspringtemperatur von 155-200°C. Zur Herabsetzung der Anspringtemperatur können sogenannte Kicker, z.B. die in der Polymerisatmischung enthaltenen Zn-Stabilisatoren dienen. Der Kicker kann auch in Form von Zinkoxid/Stearinsäure angewendet werden. Andere Kicker die zur Anwendung gelangen können, sind die Alkaliverbindungen, beispielsweise Natriumverbindungen oder Kaliumverbindungen, wie die Alkalibicarbonate, vorzugsweise $NaHCO_3$, oder die Alkaliverbindungen aus der Reihe der aliphatischen gesättigten $C_1$-$C_{22}$-Carboxylate, der aliphatischen olefinischen $C_2$-$C_{22}$-Carboxylate, der aliphatischen $C_2$-$C_{22}$2-Carboxylate, die mit wenigstens einer OH-Gruppe substituiert sind, der cyclischen und bicyclischen Carboxylate mit 5-22 C-Atomen, der aromatischen $C_6$-$C_{22}$-Carboxylate, der mit wenigstens einer OH-Gruppe substituierten aromatischen $C_6$-$C_{22}$-Carboxylate, der $C_1$-$C_{16}$-alkylsubstituierten Phenylcarboxylate, der Phenyl-$C_1$-$C_{16}$-alkylcarboxylate, der $C_6$-$C_{18}$-Phenolate, der Dehydracetsäure und deren Derivaten, der Mercaptide auf der Basis von Mercaptocarbonsäureester und der Glycinate.

Bei den Alkaliverbindungen aus der Reihe der Carboxylate handelt es sich bevorzugt um Salze von Carbonsäuren mit 7 bis 20 C-Atomen, beispielsweise Benzoate, Alkenoate oder Alkanoate, bevorzugt Stearate, Oleate, Laurate, Palmitate, Hydroxystearate oder 2-Ethylhexanoate. Besonders bevorzugt sind Stearate, Oleate und p-tert-Butylbenzoate. Die Kaliumverbindungen sind dabei besonders bevorzugt und Kalium-2-Ethylhexanoat ganz besonders bevorzugt.

Die Zusammensetzungen können auch an sich bekannte Keimbildner und Porenregler enthalten. Als Keimbildner und Porenregler werden den Schäum-Mischungen z.B. geringe Mengen feinteiliger Feststoffe oder $CO_2$ abspaltende Mischungen von $NaHCO_3$ und feste organische Säuren zugesetzt.

Die Zusammensetzungen nach vorliegender Erfindung können verarbeitungsfertige treibmittelhaltige PVC-Formmassen, beispielsweise für das Extrudieren strukturgeschäumter Rohre und Profile oder für den Thermoplast-Schaumguss darstellen. Oder es kann sich um Plastisole zur Verarbeitung zu geschäumten Weich-PVC-Gegenständen handeln.

Geschäumte Gegenstände sind aus den Zusammensetzungen nach vorliegender Erfindung auch über die an sich bekannten Hochdruck-Verfahren für die Herstellung von Hart-PVC- und Weich-PVC-Schäumen erhältlich.

Aus den erfindungsgemässen Zusammensetzungen lassen sich PVC-Schäume, beispielsweise Weich-PVC-Schäume, nach dem an sich bekannten Niederdruck-Verfahren herstellen.

Weiters können die erfindungsgemässen Zusammensetzungen beispielsweise beim an sich bekannten drucklosen Verfahren eingesetzt werden.

Die genannten Verfahren lassen sich beispielsweise aus Hansjürgen Saechtling, Kunststoff-Taschenbuch, 22. Auflage, Carl Hanser Verlage München, entnehmen.

Die Komponente (c) der erfindungsgemässen Zusammensetzung kann irgendein cyclisches oder nichtcyclisches sterisch gehindertes Amin sein. Bevorzugt ist (c) eine Verbindung, die mindestens eine Gruppe der Formel III

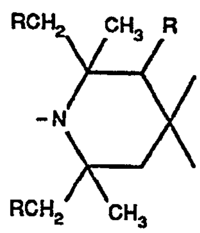

(III)

enthält, worin R Wasserstoff oder Methyl bedeutet. Bevorzugt ist R Wasserstoff. Es handelt sich dabei um Derivate von Polyalkylpiperidinen, insbesondere von 2,2,6,6-Tetramethylpiperidin. Bevorzugt tragen diese Polyalkylpiperidine in 4-Stellung einen oder zwei polare Substituenten oder ein polares Spiro-Ringsystem.

Von Bedeutung sind insbesondere die folgenden Klassen von Polyalkylpiperidinen.

a) Verbindungen der Formel IV

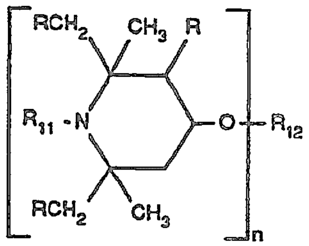

(IV),

worin n eine Zahl von 1 bis 4, vorzugsweise 1 oder 2 bedeutet, R Wasserstoff oder Methyl bedeutet, $R_{11}$ Wasserstoff, Oxyl, Hydroxyl, $C_1$-$C_{12}$-Alkyl, $C_3$-$C_8$-Alkenyl, $C_3$-$C_8$-Alkinyl, $C_7$-$C_{12}$-Aralkyl, $C_1$-$C_{18}$-Alkoxy, $C_5$-$C_8$-Cycloalkoxy, $C_7$-$C_9$-Phenylalkoxy, $C_1$-$C_8$-Alkanoyl, $C_3$-$C_5$-Alkenoyl, $C_1$-$C_{18}$-Alkanoyloxy, Benzyloxy, Glycidyl oder eine Gruppe $-CH_2CH(OH)$-Z, worin Z Wasserstoff, Methyl oder Phenyl ist, bedeutet, wobei $R_{11}$ vorzugsweise H, $C_1$-$C_4$-Akyl, Allyl, Benzyl, Acetyl oder Acryloyl ist und $R_{12}$, wenn n 1 ist, Wasserstoff, gegebenenfalls durch ein oder mehrere Sauerstoffatome unterbrochenes $C_1$-$C_{18}$-Alkyl, Cyanethyl, Benzyl, Glycidyl, einen einwertigen Rest einer aliphatischen, cycloaliphatischen, araliphatischen, ungesättigten oder aromatischen Carbonsäure, Carbaminsäure oder Phosphor enthaltenden Säure oder einen einwertigen Silylrest, vorzugsweise einen Rest einer aliphatischen Carbonsäure mit 2 bis 18 C-Atomen, einer cycloaliphatischen Carbonsäure mit 7 bis 15 C-Atomen, einer $\alpha,\beta$-ungesättigten Carbonsäure mit 3 bis 5 C-Atomen oder einer aromatischen Carbonsäure mit 7 bis 15 C-Atomen bedeutet, wenn n 2 ist, $C_1$-$C_{12}$-Alkylen, $C_4$-$C_{12}$-Alkenylen, Xylylen, einen zweiwertigen Rest einer aliphatischen, cycloaliphatischen, araliphatischen oder aromatischen Dicarbonsäure, Dicarbaminsäure oder Phosphor enthaltenden Säure oder einen zweiwertigen Silylrest, vorzugsweise einen Rest einer aliphatischen Dicarbonsäure mit 2 bis 36 C-Atomen, einer cycloaliphatischen oder aromatischen Dicarbonsäure mit 8-14 C-Atomen oder einer aliphatischen, cycloaliphatischen oder aromatischen Dicarbaminsäure mit 8-14 C-Atomen bedeutet, wenn n 3 ist, einen dreiwertigen Rest einer aliphatischen, cycloaliphatischen oder aromatischen Tricarbonsäure, einer aromatischen Tricarbaminsäure oder einer Phosphor enthaltenden Säure oder einen dreiwertigen Silylrest bedeutet und wenn n 4 ist, einen vierwertigen Rest einer aliphatischen, cycloaliphatischen oder aromatischen Tetracarbonsäure bedeutet.

Bedeuten etwaige Substituenten $C_1$-$C_{12}$-Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.

In der Bedeutung von $C_1$-$C_{18}$-Alkyl kann $R_{11}$ oder $R_{12}$ z.B. die oben angeführten Gruppen und dazu noch beispielsweise n-Tridecyl, n-Tetradecyl, n-Hexadecyl oder n-Octadecyl darstellen.

Wenn $R_{11}$ $C_3$-$C_8$-Alkenyl bedeutet, so kann es sich z.B. um 1-Propenyl, Allyl, Methallyl, 2-Butenyl, 2-Pentenyl, 2-Hexenyl, 2-Octenyl, 4-tert.Butyl-2-butenyl handeln.

$R_{11}$ ist als $C_3$-$C_5$-Alkinyl bevorzugt Propargyl.

Als $C_7$-$C_{12}$-Aralkyl ist $R_{11}$ insbesondere Phenethyl und vor allem Benzyl.

$R_{11}$ ist als $C_1$-$C_8$-Alkanoyl beispielsweise Formyl, Propionyl, Butyryl, Octanoyl, aber bevorzugt Acetyl und als $C_3$-$C_5$-Akenoyl insbesondere Acryloyl.

Bedeutet $R_{12}$ einen einwertigen Rest einer Carbonsäure, so stellt es beispielsweise einen Essigsäure-, Capronsäure-, Stearinsäure-, Acrylsäure-, Methacrylsäure-, Benzoe- oder $\beta$-(3,5-Di-tert.-butyl-4-hydroxyphenyl)-propionsäurerest dar.

Bedeutet $R_{12}$ einen zweiwertigen Rest einer Dicarbonsäure, so stellt es beispielsweise einen Malonsäure-, Bernsteinsäure-, Glutarsäure-, Adipinsäure-, Korksäure-, Sebacinsäure-, Maleinsäure-, Itaconsäure-, Phthalsäure-, Dibutylmalonsäure-, Dibenzylmalonsäure-, Butyl-(3,5-di-tert.butyl-4-hydroxybenzyl)-malonsäure- oder Bicycloheptendicarbonsäurerest dar.

Stellt $R_{12}$ einen dreiwertigen Rest einer Tricarbonsäure dar, so bedeutet es z.B. einen Trimellitsäure-, Citronensäure- oder Nitrilotriessigsäurerest.

Stellt $R_{12}$ einen vierwertigen Rest einer Tetracarbonsäure dar, so bedeutet es z.B. den vierwertigen Rest von Butan-1,2,3,4-tetracarbonsäure oder von Pyromellitsäure.

Bedeutet $R_{12}$ einen zweiwertigen Rest einer Dicarbaminsäure, so stellt es beispielsweise einen Hexamethylendicarbaminsäure- oder einen 2,4-Toluylen-dicarbaminsäurerest dar.

Bevorzugt sind Verbindungen der Formel IV, worin R Wasserstoff ist, $R_{11}$ Wasserstoff oder Methyl ist, n 2 ist und $R_{12}$ der Diacylrest einer aliphatischen Dicarbonsäure mit 4-12 C-Atomen ist.

Beispiele für Polyalkylpiperidin-Verbindungen dieser Klasse sind folgende Verbindungen :

1) 4-Hydroxy-2,2,6,6-tetramethylpiperidin
2) 1-Allyl-4-hydroxy-2,2,6,6-tetramethylpiperidin
3) 1-Benzyl-4-hydroxy-2,2,6,6-tetramethylpiperidin
4) 1-(4-tert.-Butyl-2-butenyl)-4-hydroxy-2,2,6,6-tetramethylpiperidin
5) 4-Stearoyloxy-2,2,6,6-tetramethylpiperidin
6) 1-Ethyl-4-salicyloyloxy-2,2,6,6-tetramethylpiperidin
7) 4-Methacryloyloxy-1,2,2,6,6-pentamethylpiperidin
8) 1,2,2,6,6-Pentamethylpiperidin-4-yl-β-(3,5-di-tert.-butyl-4-hyd- roxyphenyl)-propionat
9) Di-(1-benzyl-2,2,6,6-tetramethylpiperidin-4-yl)-maleinat
10) Di-(2,2,6,6-tetramethylpiperidin-4-yl)-succinat
11) Di-(2,2,6,6-tetramethylpiperidin-4-yl)-glutarat
12) Di-(2,2,6,6-tetramethylpiperidin-4-yl)-adipat
13) Di-(2,2,6,6-tetramethylpiperidin-4-yl)-sebacat
14) Di-(1,2,2,6,6-pentamethylpiperidin-4-yl)-sebacat
15) Di-(1,2,3,6-tetramethyl-2,6-diethyl-piperidin-4-yl)-sebacat
16) Di-(1-allyl-2,2,6,6-tetramethylpiperidin-4-yl)-phthalat
17) 1-Hydroxy-4-β-cyanoethyloxy-2,2,6,6-tetramethylpiperidin
18) 1-Acetyl-2,2,6,6-tetramethylpiperidin-4-yl-acetat
19) Trimellithsäure-tri-(2,2,6,6-tetramethylpiperidin-4-yl)-ester
20) 1-Acryloyl-4-benzyloxy-2,2,6,6-tetramethylpiperidin
21) Diethylmalonsäure-di(2,2,6,6-tetramethylpiperidin-4-yl)-ester
22) Dibutyl-malonsäure-di-(1,2,2,6,6-pentamethylpiperidin-4-yl)-ester
23) Butyl-(3,5-di-tert.-butyl-4-hydroxybenzyl)-malonsäure-di-(1,2,2,6,6-pentamethylpiperidin-4-yl)-ester
24) Di-(1-octyloxy-2,2,6,6-tetramethylpiperidin-4-yl)-sebacat
25) Di-(1-cyclohexyloxy-2,2,6,6-tetramethylpiperidin-4-yl)-sebacat
26) Hexan-1',6'-bis-(4-carbamoyloxy-1-n-butyl-2,2,6,6-tetramethylpiperidin)
27) Toluol-2',4'-bis-(4-carbamoyloxy-1-n-propyl-2,2,6,6-tetramethylpiperidin)
28) Dimethyl-bis-(2,2,6,6-tetramethylpiperidin-4-oxy)-silan
29) Phenyl-tris-(2,2,6,6-tetramethylpiperidin-4-oxy)-silan
30) Tris-(1-propyl-2,2,6,6-tetramethylpiperidin-4-yl)-phosphit
31) Tris-(1-propyl-2,2,6,6-tetramethylpiperidin-4-yl)phosphat
32) Phenyl-[bis-(1,2,2,6,6-pentamethylpiperidin-4-yl)]-phosphonat
33) 4-Hydroxy-1,2,2,6,6-pentamethylpiperidin
34) 4-Hydroxy-N-hydroxyethyl-2,2,6,6-tetramethylpiperidin
35) 4-Hydroxy-N-(2-hydroxypropyl)-2,2,6,6-tetramethylpiperidin
36) 1-Glycidyl-4-hydroxy-2,2,6,6-tetramethylpiperidin

b) Verbindungen der Formel (V)

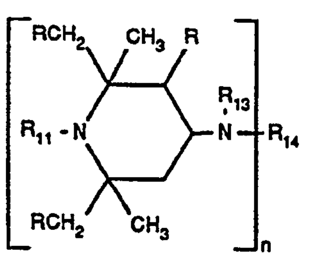

(V)

worin n die Zahl 1 oder 2 bedeutet, R und $R_{11}$ die unter a) angegebene Bedeutung haben, $R_{13}$ Wasserstoff, $C_1$-$C_{12}$-Alkyl, $C_2$-$C_5$-Hydroxyalkyl, $C_5$-$C_7$-Cycloalkyl, $C_7$-$C_8$-Aralkyl, $C_2$-$C_{18}$-Alkanoyl, $C_3$-$C_5$-Alkenoyl, Benzoyl oder eine Gruppe der Formel

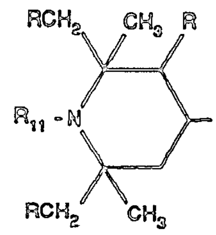

ist und $R_{14}$ wenn n 1 ist, Wasserstoff, $C_1$-$C_{18}$-Alkyl, $C_3$-$C_8$-Alkenyl, $C_5$-$C_7$-Cycloalkyl, mit einer Hydroxy-, Cyano-, Alkoxycarbonyl- oder Carbamidgruppe substituiertes $C_1$-$C_4$-Alkyl, Glycidyl, eine Gruppe der Formel —$CH_2$-CH(OH)-Z oder der Formel —CONH-Z ist, worin Z Wasserstoff, Methyl oder Phenyl bedeutet; wenn n 2 ist, $C_2$-$C_{12}$-Alkylen, $C_6$-$C_{12}$-Arylen, Xylylen, eine —$CH_2$-CH(OH)-$CH_2$-Gruppe oder eine Gruppe —$CH_2$-CH(OH)-CH2-O-D-O— bedeutet, worin D $C_2$-$C_{10}$-Alkylen, $C_6$-$C_{15}$-Arylen, $C_6$-$C_{12}$-Cycloalkylen ist, oder vorausgesetzt, dass $R_{13}$ nicht Alkanoyl, Alkenoyl oder Benzoyl bedeutet, $R_{14}$ auch einen zweiwertigen Rest einer aliphatischen, cycloaliphatischen oder aromatischen Dicarbonsäure oder Dicarbaminsäure oder auch die Gruppe —CO— bedeuten kann, oder $R_{13}$ und $R_{14}$ zusammen, wenn n 1 ist, den zweiwertigen Rest einer aliphatischen, cycloaliphatischen oder aromarischen 1,2- oder 1,3-Dicarbonsäure bedeuten können.

Stellen etwaige Substituenten $C_1$-$C_{12}$- oder $C_1$-$C_{18}$-Alkyl dar, so haben sie die bereits unter a) angegebene Bedeutung.

Bedeuten etwaige Substituenten $C_5$-$C_7$-Cycloalkyl, so stellen sie insbesondere Cyclohexyl dar.

Als $C_7$-$C_8$-Aralkyl ist $R_{13}$ insbesondere Phenylethyl oder vor allem Benzyl. Als $C_2$-$C_5$-Hydroxyalkyl ist $R_{13}$ insbesondere 2-Hydroxyethyl oder 2-Hydroxypropyl.

$R_{13}$ ist als $C_2$-$C_{18}$-Alkanoyl beispielsweise Propionyl, Butyryl, Octanoyl, Dodecanoyl, Hexadecanoyl, Octadecanoyl, aber bevorzugt Acetyl und als $C_3$-$C_5$-Alkenoyl insbesondere Acryloyl.

Bedeutet $R_{14}$ $C_2$-$C_8$-Alkenyl, dann handelt es sich z.B. um Allyl, Methallyl, 2-Butenyl, 2-Pentenyl, 2-Hexenyl oder 2-Octenyl.

$R_{14}$ als mit einer Hydroxy-, Cyano-, Alkoxycarbonyl- oder Carbamidgruppe substituiertes $C_1$-$C_4$-Alkyl kann z.B. 2-Hydroxyethyl, 2-Hydroxypropyl, 2-Cyanethyl, Methoxycarbonylmethyl, 2-Ethoxycarbonylethyl, 2-Aminocarbonylpropyl oder 2-(Dimethylaminocarbonyl)-ethyl sein.

Stellen etwaige Substituenten $C_2$-$C_{12}$-Alkylen dar, so handelt es sich z.B. um Ethylen, Propylen, 2,2-Dimethylpropylen, Tetramethylen, Hexamethylen, Octamethylen, Decamethylen oder Dodecamethylen.

Bedeuten etwaige Substituenten $C_6$-$C_{15}$-Arylen, so stellen sie z.B. o-, m- oder p-Phenylen, 1,4-Naphthylen oder 4,4'-Diphenylen dar.

Als $C_6$-$C_{12}$-Cycloalkylen ist D insbesondere Cyclohexylen.

Bevorzugt sind Verbindungen der Formel V, worin n 1 oder 2 ist, R Wasserstoff ist, $R_{11}$ Wasserstoff oder Methyl ist, $R_{13}$ Wasserstoff, $C_1$-$C_{12}$-Alkyl oder eine Gruppe der Formel

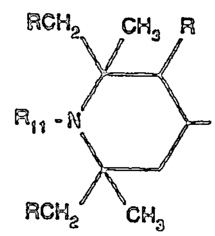

ist und $R_{14}$ im Fall von n = 1 Wasserstoff oder $C_1$-$C_{12}$-Alkyl ist, und im Fall von n = 2 $C_2$-$C_8$-Alkylen ist.

Beispiele für Polyalkylpiperidin-Verbindungen dieser Klasse sind folgende Verbindungen :

37) N,N'-Bis-(2,2,6,6-tetramethylpiperidin-4-yl)-hexamethylen-1,6-diamin
38) N,N'-Bis-(2,2,6,6-tetramethylpiperidin-4-yl)-hexamethylen-1,6-diacetamid
39) Bis-(2,2,6,6-tetramethylpiperidin-4-yl)-amin
40) 4-Benzoylamino-2,2,6,6-tetramethylpiperidin
41) N,N'-Bis-(2,2,6,6-tetramethylpiperidin-4-yl)-N,N'-dibutyl-adipamid
42) N,N'-Bis-(2,2,6,6-tetramethylpiperidin-4-yl)-N,N'-dicyclohexyl-2-hydroxypropylen-1,3-diamin
43) N,N'-Bis-(2,2,6,6-tetramethylpiperidin-4-yl)-p-xylylen-diamin
44) N,N'-Bis-(2,2,6,6-tetramethylpiperidin-4-yl)-succindiamid

45) N-(2,2,6,6-Tetramethylpiperidin-4-yl)-β-aminodipropionsäure-di-(2,2,6,6-tetramethylpiperidin-4-yl)-ester

46) Die Verbindung der Formel

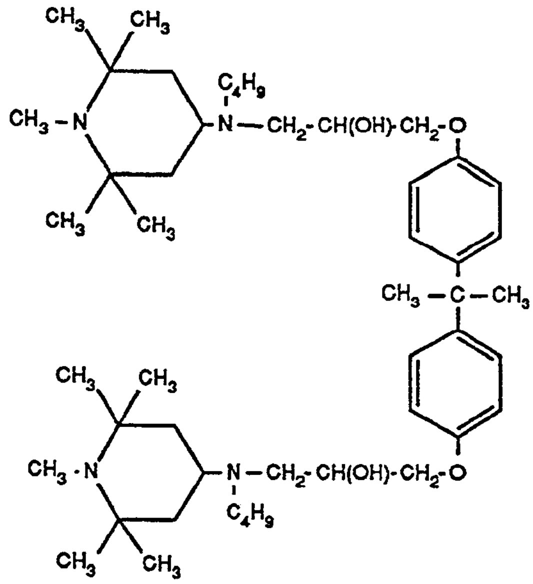

47) 4-(Bis-2-hydroxyethyl-amino)-1,2,2,6,6-pentamethylpiperidin

48) 4-(3-Methyl-4-hydroxy-5-tert.-butyl-benzoesäureamido)-2,2,6,6-tetramethylpiperidin

49) 4-Methacrylamido-1,2,2,6,6-pentamethylpiperidin

c) Verbindungen der Formel (VI)

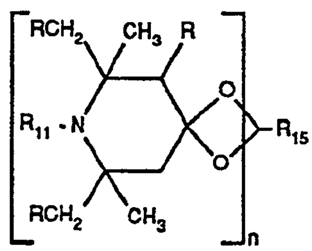

(VI)

worin n die Zahl 1 oder 2 bedeutet, R und $R_{11}$ die unter a) angegebene Bedeutung haben und $R_{15}$, wenn n 1 ist, $C_2$-$C_8$-Alkylen oder -Hydroxyalkylen oder $C_4$-$C_{22}$-Acyloxyalkylen, wenn n 2 ist, die Gruppe $(-CH_2)_2C(CH_2-)_2$ bedeutet.

Bedeutet $R_{15}$ $C_2$-$C_8$-Alkylen oder—Hydroxyalkylen, so stellt es beispielsweise Ethylen, 1-Methyl-ethylen, Propylen, 2-Ethyl-propylen oder 2-Ethyl-2-hydroxymethylpropylen dar.

Als $C_4$-$C_{22}$-Acyloxyalkylen bedeutet $R_{15}$ z.B. 2-Ethyl-2-acetoxymethylpropylen.

Beispiele für Polyalkylpiperidin-Verbindungen dieser Klasse sind folgende Verbindungen :

50) 9-Aza-8,8,10,10-tetramethyl-1,5-dioxaspiro[5.5]undecan

51) 9-Aza-8,8,10,10-tetramethyl-3-ethyl-1,5-dioxaspiro[5.5]undecan

52) 8-Aza-2,7,7,8,9,9-hexamethyl-1,4-dioxaspiro[4.5]decan

53) 9-Aza-hydroxymethyl-3-ethyl-8,8,9,10,10-pentamethyl-1,5-dioxaspiro[5.5]undecan

54) 9-Aza-3-ethyl-3-acetoxymethyl-9-acetyl-8,8,10,10-tetramethyl-1,5-dioxaspiro[5.5]-undecan

55) 2,2,6,6-Tetramethylpiperidin-4-spiro-2'-(1',3'-dioxan)-5'-spiro-5''-(1'',3''-dioxan)-2''-spiro-4'''-(2''',2''',6''',6'''-tetramethylpiperidin).

d) Verbindungen der Formeln VIIA, VIIB und VIIC

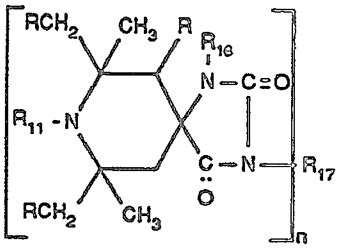

(VIIIA)

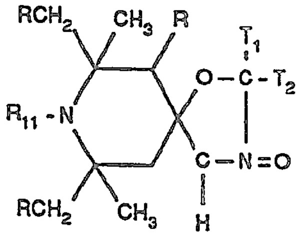

(VIIIB)

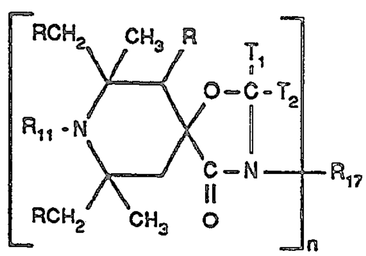

(VIIC)

worin n die Zahl 1 oder 2 bedeutet, R und $R_{11}$ die unter a) angegebene Bedeutung haben, $R_{16}$ Wasserstoff, $C_1$-$C_{12}$-Alkyl, Allyl, Benzyl, Glycidyl oder $C_2$-$C_6$-Alkoxyalkyl ist und $R_{17}$, wenn n 1 ist, Wasserstoff, $C_1$-$C_{12}$-Alkyl, $C_3$-$C_5$-Alkenyl, $C_7$-$C_9$-Aralkyl, $C_5$-$C_7$-Cycloalkyl, $C_2$-$C_9$-Hydroxyalkyl, $C_2$-$C_6$-Alkoxyalkyl, $C_6$-$C_{10}$-Aryl, Glycidyl oder eine Gruppe der Formel —$(CH_2)_p$-COO-Q oder der Formel —$(CH_2)_p$-O-CO-Q ist, worin p 1 oder 2 und Q $C_1$-$C_4$-Alkyl oder Phenyl sind, wenn n 2 ist, $C_2$-$C_{12}$-Alkylen, $C_4$-$C_{12}$-Alkenylen, C|$_6$-$C_{12}$-Arylen, eine Gruppe —$CH_2$-CH(OH)-$CH_2$-O-D-O-$CH_2$-CH(OH)-$CH_2$—, worin D $C_2$-$C_{10}$-Alkylen, $C_6$-$C_{15}$-Arylen, $C_6$-$C_{12}$-Cycloalkylen ist, oder eine Gruppe —$CH_2CH(OZ')CH_2$-$(OCH_2$-$CH(OZ')CH_2)_2$— bedeutet, worin Z' Wasserstoff, $C_1$-$C_{18}$-Alkyl, Allyl, Benzyl, $C_2$-$C_{12}$-Alkanoyl oder Benzoyl ist, $T_1$ und $T_2$ unabhängig voneinander Wasserstoff, $C_1$-$C_{18}$-Alkyl oder gegebenenfalls durch Halogen oder $C_1$-$C_4$-Alkyl substituiertes $C_6$-$C_{10}$-Aryl oder $C_7$-$C_9$-Aralkyl bedeuten oder $T_1$ und $T_2$ zusammen mit dem sie bindenden C-Atom einen $C_5$-$C_{12}$-Cycloalkanring bilden.

Bedeuten etwaige Substituenten $C_1$-$C_{12}$-Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.

Etwaige Substituenten in der Bedeutung von $C_1$-$C_{18}$-Alkyl können z.B. die oben angeführten Gruppen und dazu noch beispielsweise n-Tridecyl, n-Tetradecyl, n-Hexadecyl oder n-Octadecyl darstellen.

Bedeuten etwaige Substituenten $C_2$-$C_6$-Alkoxyalkyl, so stellen sie z.B. Methoxymethyl, Ethoxymethyl, Propoxymethyl, tert.-Butoxymethyl, Ethoxyethyl, Ethoxypropyl, n-Butoxyethyl, tert.-Butoxyethyl, Isopropoxyethyl oder Propoxypropyl dar.

Stelh $R_{17}$ $C_3$-$C_5$-Alkenyl dar, so bedeutet es z.B. 1-Propenyl, Allyl, Methallyl, 2-Butenyl oder 2-Pentenyl.

Als $C_7$-$C_9$-Aralkyl sind $R_{17}$, $T_1$ und $T_2$ insbesondere Phenethyl oder vor allem Benzyl. Bilden $T_1$ und $T_2$ zusammen mit dem C-Atom einen Cycloalkanring, so kann dies z.B. ein Cyclopentan-, Cyclohexan-, Cyclooctan- oder Cyclododecanring sein.

Bedeutet $R_{17}$ $C_2$-$C_5$-Hydroxyalkyl, so stellt es z.B. 2-Hydroxyethyl, 2-Hydroxypropyl, 2-Hydroxybutyl oder 4-Hydroxybutyl dar.

Als $C_6$-$C_{10}$-Aryl bedeuten $R_{17}$, $T_1$ und $T_2$ insbesondere Phenyl, α- oder β-Naphthyl, die gegebenenfalls mit Halogen oder $C_1$-$C_4$-Alkyl substituiert sind.

Stellt R|$_{17}$ $C_2$-$C_{12}$-Alkylen dar, so handelt es sich z.B. um Ethylen, Propylen, 2,2-Dimethylpropylen, Tetramethylen, Hexamethylen, Octamethylen, Decamethylen oder Dodecamethylen.
Als $C_4$-$C_{12}$-Alkenylen bedeutet $R_{17}$ insbesondere 2-Butenylen, 2-Pentenylen oder 3-Hexenylen.
Bedeutet $R_{17}$ $C_6$-$C_{12}$-Arylen, so stellt es beispielsweise o-, m- oder p-Phenylen, 1,4-Naphthylen oder 4,4'-Diphenylen dar.
Bedeutet Z' $C_2$-$C_{12}$-Alkanoyl, so stellt es beispielsweise Propionyl, Butyryl, Octanoyl, Dodecanoyl, aber bevorzugt Acetyl dar.
D hat als $C_2$-$C_{10}$-Alkylen, $C_6$-$C_{15}$-Arylen oder $C_6$-$C_{12}$-Cycloalkylen die unter b) angegebene Bedeutung.
Beispiele für Polyalkylpiperidin-Verbindungen dieser Klasse sind folgende Verbindungen :

56) 3-Benzyl-1,3,8-triaza-7,7,9,9-tetramethylspiro[4.5]decan-2,4-dion
57) 3-n-Octyl-1,3,8-triaza-7,7,9,9-tetramethylspiro[4.5]decan-2,4-dion
58) 3-Allyl-1,3,8-triaza-1,7,7,9,9-pentamethylspiro[4.5]decan-2,4-dion
59) 3-Glycidyl-1,3,8-triaza-7,7,8,9,9-pentamethylspiro[4.5]decan-2,4-dion
60) 1,3,7,7,8,9,9-Heptamethyl-1,3,8-triazaspiro[4.5]decan-2,4-dion
61) 2-Iso-propyl-7,7,9,9-tetramethyl-1-oxa-3,8-diaza-4-oxo-spiro[4.5]decan
62) 2,2-Dibutyl-7,7,9,9-tetramethyl-1-oxa-3,8-diaza-4-oxo-spiro-[4.5]decan
63) 2,2,4,4-Tetramethyl-7-oxa-3,20-diaza-21-oxo-dispiro[5.1.11.2]heneicosan
64) 2-Butyl-7,7,9,9-tetramethyl-1-oxa-4,8-diaza-3-oxo-spiro-[4,5]decan
65) 8-Acetyl-3-dodecyl-1,3,8-triaza-7,7,9,9-tetramethylspiro[4,5]-decan-2,4-dion oder die Verbindungen der folgenden Formeln :

66)

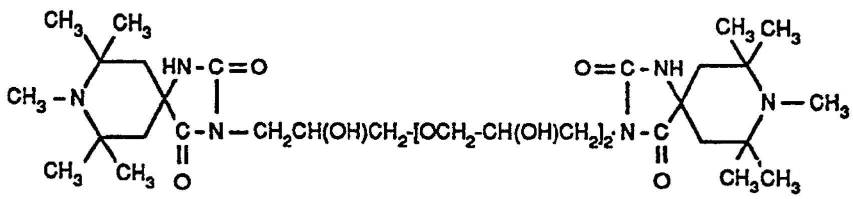

67)

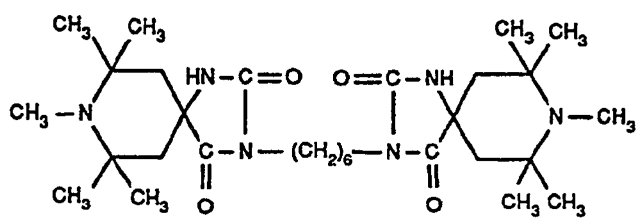

68)

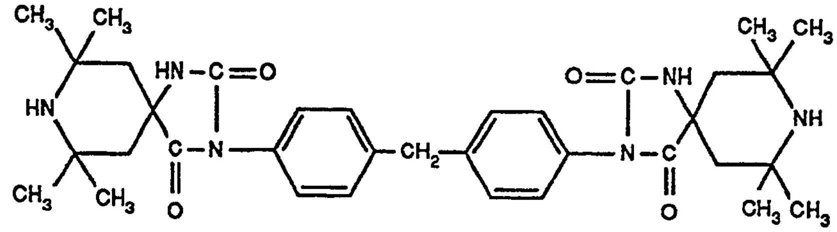

69)

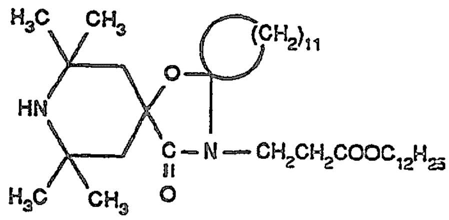

e) Verbindungen der Formel VIII

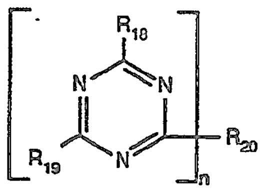

(VIII),

worin n die Zahl 1 oder 2 ist und $R_{18}$ eine Gruppe der Formel

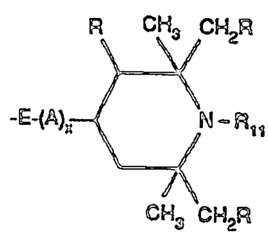

bedeutet, worin R und $R_{11}$ die unter a) angegebene Bedeutung haben, E —O— oder —$NR_{11}$— ist, A $C_2$-$C_6$-Alkylen oder —$(CH_2)_3$-O— und x die Zahlen O oder 1 bedeuten, $R_{19}$ gleich $R_{18}$ oder eine der Gruppen —$NR_{21}R_{22}$, —$OR_{23}$, —$NHCH_2OR_{23}$ oder —$N(CH_2OR_{23})_2$ ist, $R_{20}$, wenn n = 1 ist, gleich $R_{18}$ oder $R_{19}$, und wenn n = 2 ist, eine Gruppe —E-B-E— ist, worin B gegebenenfalls durch —$N(R_{21})$— unterbrochenes $C_2$-$C_6$-Alkylen bedeutet, $R_{11}$ $C_1$-$C_{12}$-Alkyl, Cyclohexyl, Benzyl oder $C_1$-$C_4$-Hydroxyalkyl oder eine Gruppe der Formel

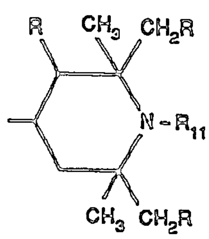

ist, $R_{22}$ $C_1$-$C_{12}$-Alkyl, Cyclohexyl, Benzyl, $C_1$-$C_4$-Hydroxyalkyl und $R_{23}$ Wasserstoff, $C_1$-$C_{12}$-Alkyl oder Phenyl bedeuten oder $R_{21}$ und $R_{22}$ zusammen $C_4$-$C_5$-Alkylen oder —Oxaalkylen, beispielsweise

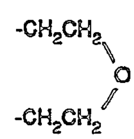

oder eine Gruppe der Formel

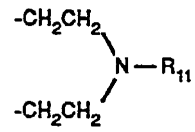

sind oder auch $R_{21}$ und $R_{22}$ jeweils eine Gruppe der Formel

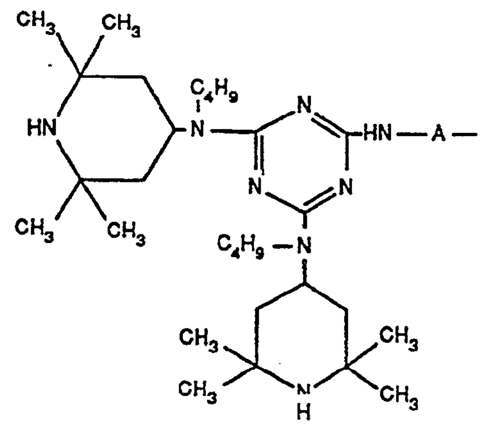

bedeuten.

Bedeuten etwaige Substituenten $C_1$-$C_{12}$-Alkyl, so stellen sie beispielsweise Methyl, Ethyl, n-Propyl, n-Butyl, sek.-Butyl, tert.-Butyl, n-Hexyl, n-Octyl, 2-Ethylhexyl, n-Nonyl, n-Decyl, n-Undecyl oder n-Dodecyl dar.

Bedeuten etwaige Substituenten $C_1$-$C_4$-Hydroxyalkyl, so stellen sie z.B. 2-Hydroxyethyl, 2-Hydroxypropyl, 3-Hydroxypropyl, 2-Hydroxybutyl oder 4-Hydroxybutyl dar.

Bedeutet A $C_2$-$C_6$-Alkylen, so stellt es beispielsweise Ethylen, Propylen, 2,2-Dimethylpropylen, Tetramethylen oder Hexamethylen dar.

Stellen $R_{21}$ und $R_2$ zusammen $C_4$-$C_5$-Alkylen oder Oxaalkylen dar, so bedeutet dies z.B. Tetramethylen, Pentamethylen oder 3-Oxapentamethylen.

Beispiele für Polyalkylpiperidin-Verbindungen dieser Klasse sind die Verbindungen der folgenden Formeln :

70)

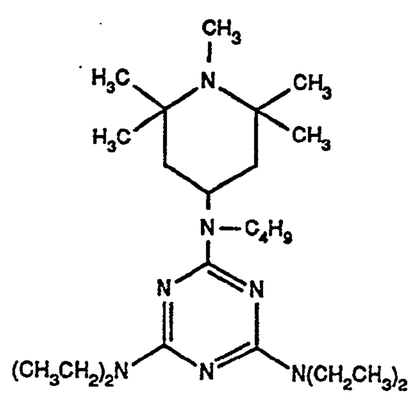

71)

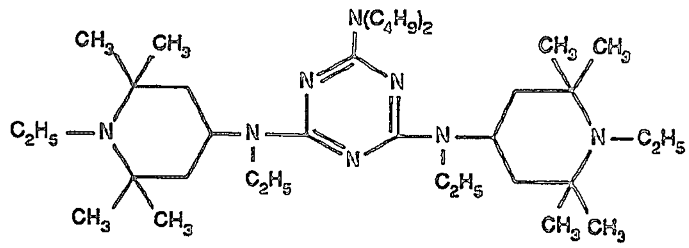

72)

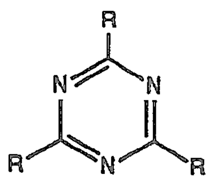 mit R = 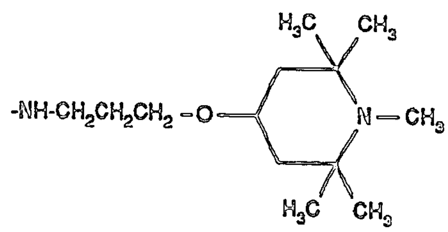

73)

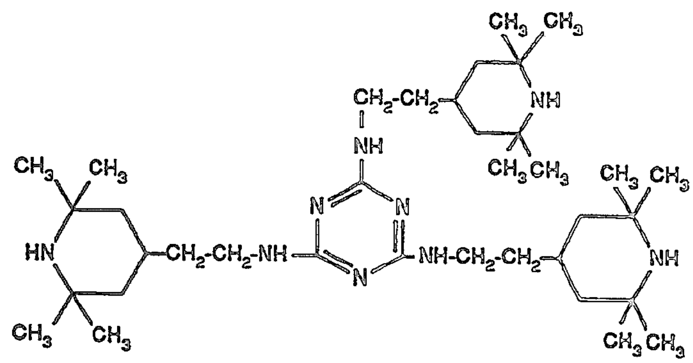

74)

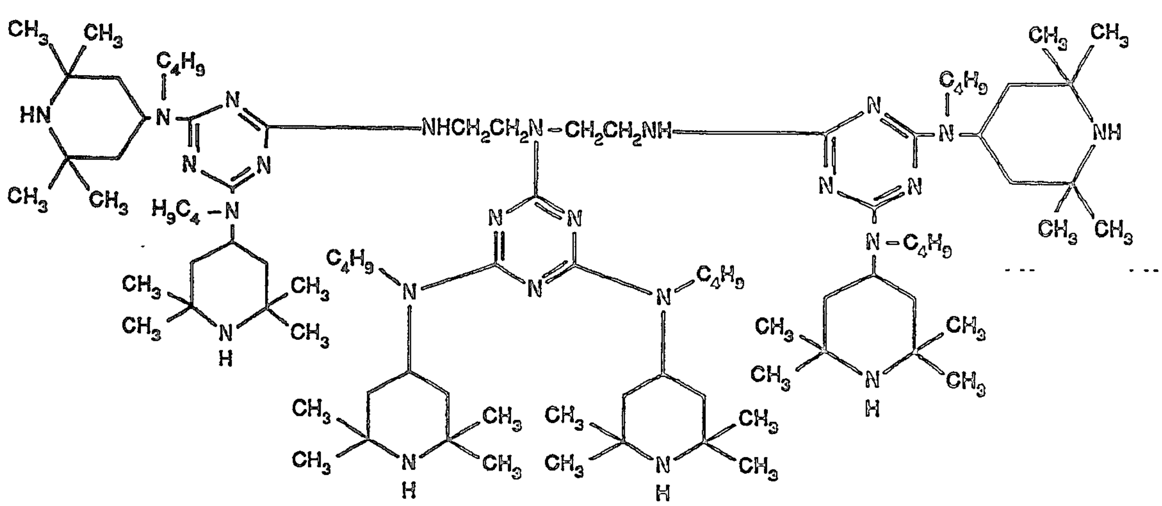

75)

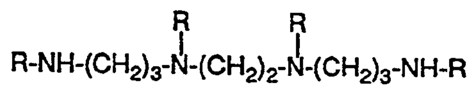

mit R =

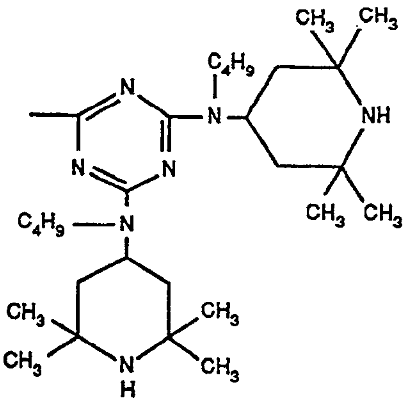

76)

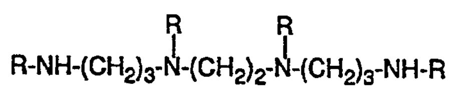

mit R =

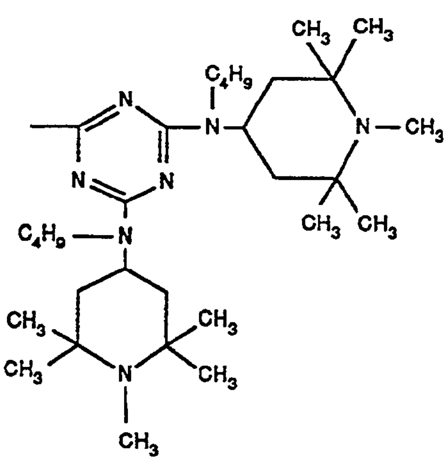

77)

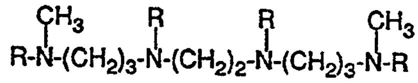

mit R = 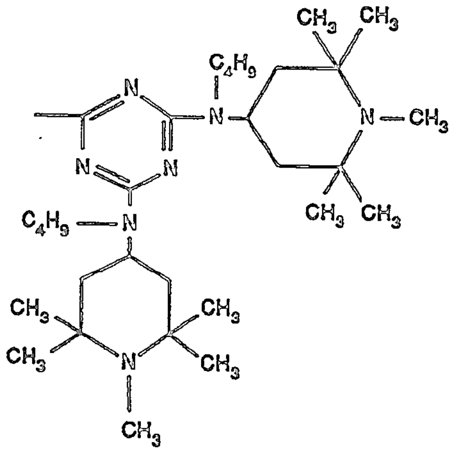

78)

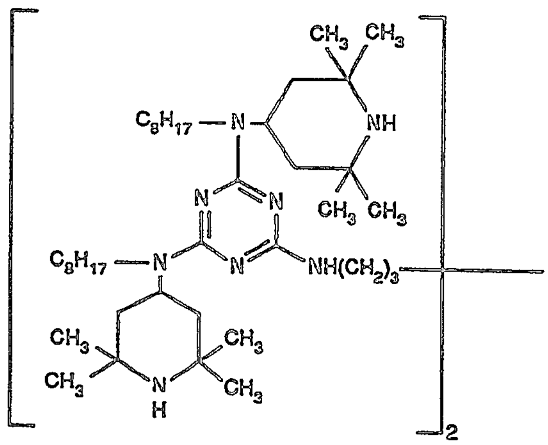

79)

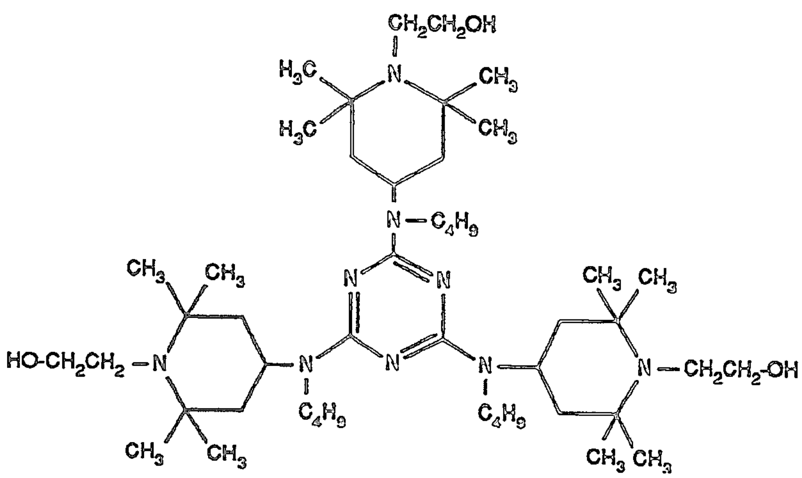

80)

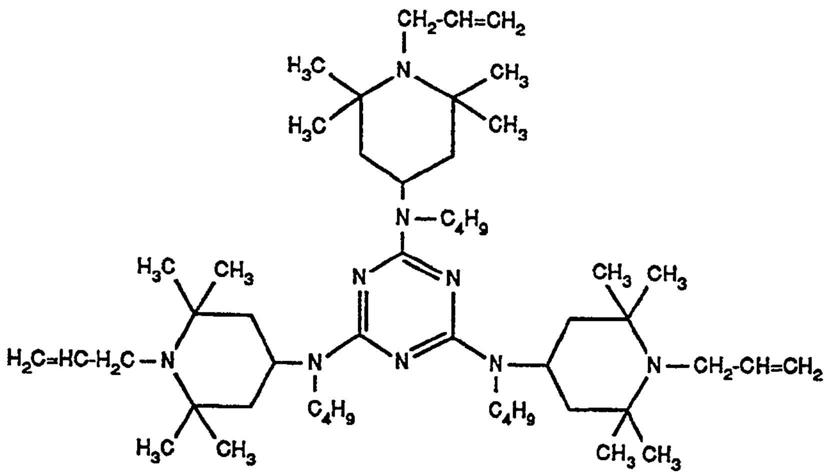

Bevorzugt sind f) Oligomere oder polymere Verbindungen, deren wiederkehrende Struktureinheit einen 2,2,6,6-Tetraalkylpiperidinrest der Formel III enthält, insbesondere Polyester, Polyäther, Polyamide, Polyamine, Polyurethane, Polyharnstoffe, Polyaminotriazine, Poly(meth)acrylate, Poly(meth)acrylamide und deren Copolymere, die solche Reste enthalten.

Beispiele für 2,2,6,6-Polyalkylpiperidin-Lichtschutzmittel dieser Klasse sind die Verbindungen der folgenden Formeln, wobei m eine Zahl von 2 bis etwa 200 bedeutet.

81)

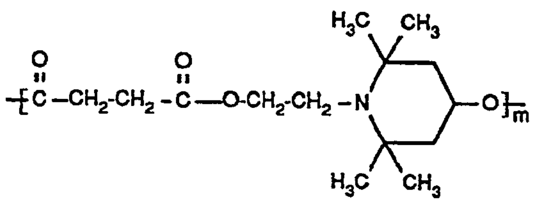

82)

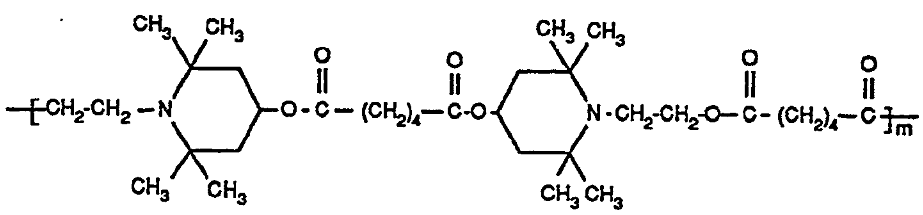

83)

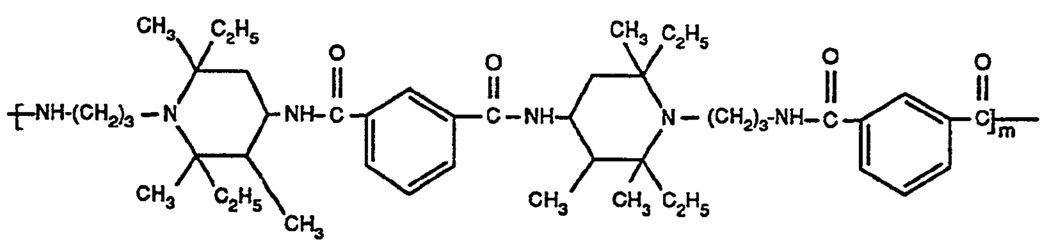

84) die besonders bevorzugte Verbindung der Formel

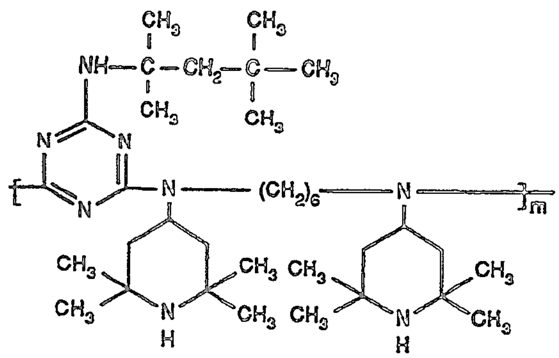

85)

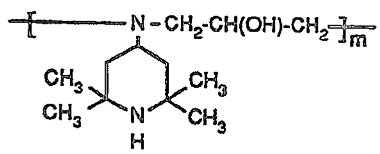

86)

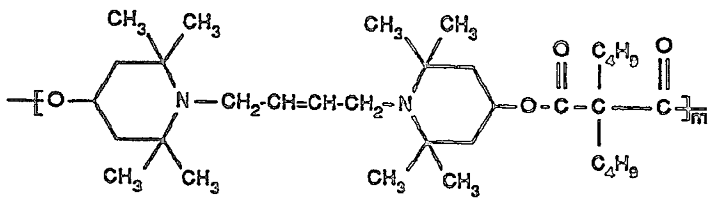

87)

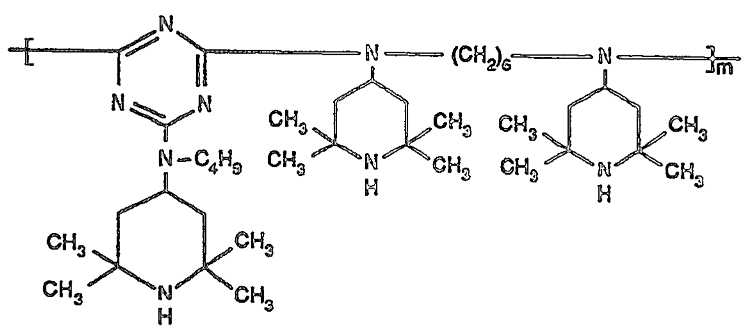

88)

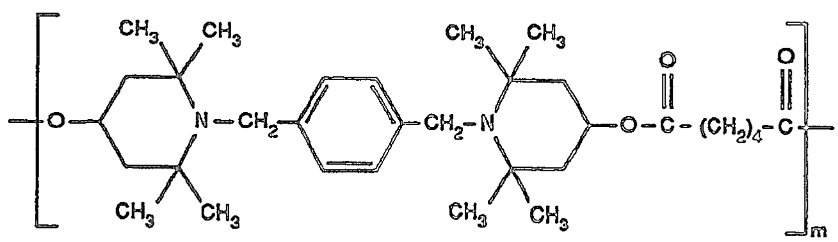

89)

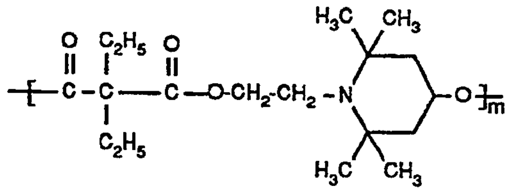

90)

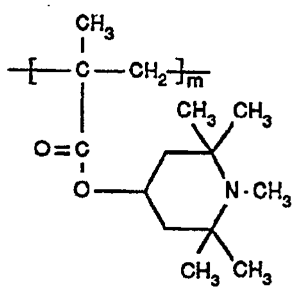

91)

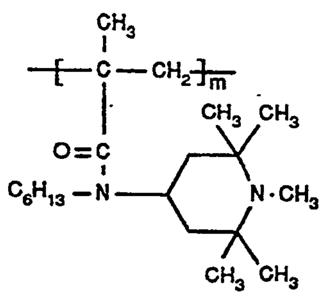

92)

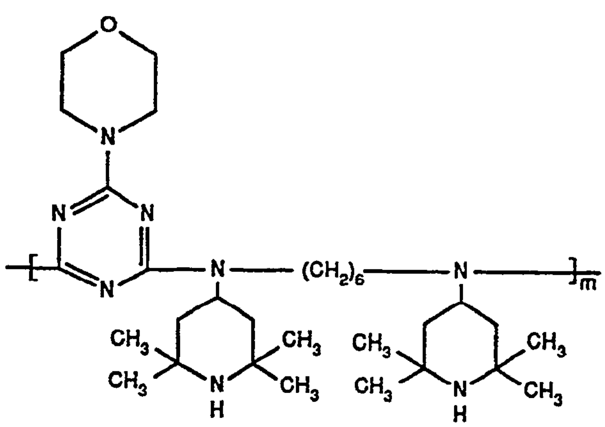

93)

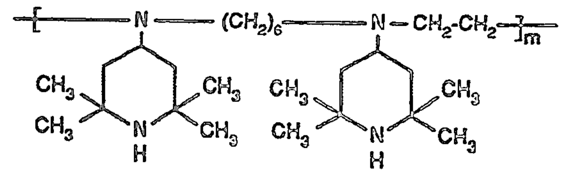

94)

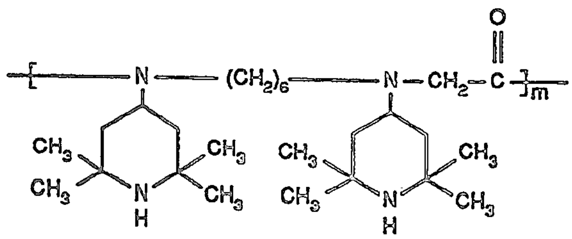

g) Verbindungen der Formel IX

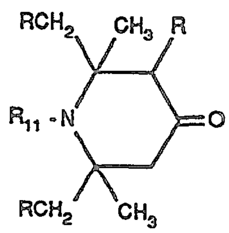

(IX)

worin R und $R_{11}$ die unter a) angegebene Bedeutung haben.

Bevorzugt sind Verbindungen der Formel IX, worin R Wasserstoff oder Methyl ist und $R_{11}$ Wasserstoff oder Methyl ist.

Beispiele für solche Verbindungen sind :

95) 2,2,6,6-Tetramethyl-4-piperidon (Triacetonamin)

96) 1,2,2,6,6-Pentamethyl-4-piperidon

97) 2,2,6,6-Tetramethyl-4-piperidon-1-oxyl

98) 2,3,6-Trimethyl-2,6-diethyl-4-piperidon

Zweckmässig sind Zusammensetzungen, wie oben beschrieben, enthaltend als d) mindestens eine organische Zinkverbindung und/oder eine anorganische Zinkverbindung der Reihe der Carbonate, Chloride Sulfate, Oxide, Hydroxide, der basischen Oxide und Mischoxide.

Beispiele organischer Zinkverbindungen sind solche aus der Reihe der aliphatischen gesättigten $C_1$-$C_{22}$-Carboxylate, der aliphatischen olefinischen $C_2$-$C_{22}$-Carboxylate, der aliphatischen $C_2$-$C_{22}$-Carboxylate, die mit wenigstens einer OH-Gruppe substituiert sind, der cyclischen und bicyclischen Carboxylate mit 5-22 C-Atomen, der aromatischen $C_6$-$C_{22}$-Carboxylate, der mit wenigstens einer OH-Gruppe substituierten aromatischen $C_6$-$C_{22}$-Carboxylate, der $C_1$-$C_{16}$-alkylsubstituierten Phenylcarboxylate, der Phenyl-$C_1$-$C_{16}$-alkylcarboxylate, der $C_6$-$C_{18}$-Phenolate, der $C_5$-$C_{26}$-Chelate von 1,3-Diketonen oder β-Ketocarbonsäureestern, der Dehydracetsäure und deren Derivaten, der Mercaptide auf der Basis von Mercaptocarbonsäureester und der Glycinate.

Bevorzugt sind Polymerzusammensetzungen, (enthaltend als d) eine organische Zinkverbindung, wobei die Zinkverbindung ein Salz einer Carbonsäure mit 7 bis 20 C-Atomen oder ein $C_7$-$C_{20}$-Alkylphenolat darstellt.

Bei den Zinkverbindungen aus der Reihe der Carboxylate handelt es sich bevorzugt um Salze von Carbonsäuren mit 7 bis 20 C-Atomen, beispielsweise Benzoate, Alkenoate oder Alkanoate, bevorzugt Stearate, Oleate, Laurate, Palmitate, Hydroxystearate oder 2-Ethylhexanoate. Besonders bevorzugt sind Stearate, Oleate und p-tert-Butylbenzoate.

Bedeutet die Komponente d) ein Zn-Phenolat, so handelt es sich insbesondere um $C_7$-$C_{20}$-Alkylphenolat, beispielsweise Nonylphenolat.

Namentlich zu erwähnen sind, als Beispiele, die Zinksalze der monovalenten Carbonsäuren, wie Essigsäure, Propionsäure, Buttersäure, Valeriansäure, Capronsäure, Enanthsäure, Caprylsäure, Neodecansäure,

2-Ethylhexansäure, Pelargonsäure, Caprinsäure, Undecansäure, Laurinsäure, Tridecansäure, Myristylsäure, Palmitinsäure, Isostearinsäure, Stearinsäure, 12-Hydroxystearinsäure, Behensäure, Montansäure, Benzoesäure, Monochlorbenzoesäure, p-tert-Butylbenzoesäure, Dimethylhydroxybenzoesäure, 3,5-Di-tert-butyl-4-hydroxybenzoesäure, Tolylsäure, Dimethylbenzoesäure, Ethylbenzoesäure, Cuminsäure, n-Propylbenzoesäure, Aminobenzoesäure, N,N-Dimethylbenzoesäure, Acetoxybenzoesäure, Salicylsäure, p-tert-Octylsalicylsäure, Oleinsäure, Elaidinsäure, Sorbinsäure, Linolsäure, Linolensäure, Thioglykolsäure, Mercaptopropionsäure und Octylmercaptopropionsäure ; Monoester und Monoamide der divalenten Carbonsäuren, wie Oxalsäure, Malonsäure, Bernsteinsäure, Glutaminsäure, Adipinsäure, Pimelinsäure, Suberinsäure, Azelainsäure, Sebacinsäure, Phthalsäure, Isophthalsäure, Terephthalsäure, Hydroxyphthalsäure, Chlorphthalsäure, Aminophthalsäure, Maleinsäure, Fumarsäure, Citraconsäure, Mesaconsäure, Haconsäure, Aconitrinsäure und Thiodipropionsäure ; und die Di- oder Triester der tri-oder tetravalenten Carbonsäuren, wie Hemimellitsäure, Trimellitsäure, Mellophansäure, Pyromellitsäure und Mellitsäure.

Als Chelate von 1,3-Diketonen und β-Ketocarbonsäureestern sind beispielsweise Verbindungen der Formel

$$Zn(R-\underset{\underset{O}{\|}}{C}-CR'R''-\underset{\underset{O}{\|}}{C}-R''')_2$$ zu nennen,

wobei R, R', R" und R"' Alkyl mit 1 bis 18 C-Atomen, Alkenyl mit 2 bis 18 C-Atomen, Cycloalkyl mit 5 bis 12 Ring-C-Atomen, mit 1 bis 3 $C_1$-$C_4$-Alkyl substituiertes Cycloalkyl mit 5 bis 12 C-Atomen, Alkyl mit 1 bis 18 C-Atomen, das mit Cycloalkyl mit 5-12 Ring-C-Atomen substituiert ist, Phenyl-$C_1$-$C_{18}$-alkyl, $C_1$-$C_{18}$-Alkylphenyl, Phenyl, Alkoxyalkyl oder Alkylendioxyalkyl oder -phenyl darstellen.

Beispiele für R, R', R" und R"' sind Methyl, Ethyl, Propyl, Isopropyl, Isobutyl, n-Butyl, sec.-Butyl, tert.-Butyl, 1-Pentyl, 3-Pentyl, 1-Hexyl, 1-Heptyl, 3-Heptyl, 1-Octyl, 2,4,4-Trimethylphenyl, tert-Octyl, Nonyl, Decyl, Tridecyl, Pentadecyl, Heptadec-8-en-1-yl, n-Octadecyl, Allyl, Methallyl, 2-Hexenyl, 1-Methylcyclopentyl, Cyclohexyl, Cyclohexanpropyl, Phenyl, m-Tolyl, p-Ethylphenyl, tert.Butylphenyl, Benzyl, Phenylpropyl und Nonylbenzyl.

Alkoxyalkyl kann Ethoxymethyl, n-Butoxymethyl, 2-Methoxyethyl, 2-Methoxyphenyl und 4-n-Octoxyphenylbenzyl bedeuten. Alkylendioxyalkyl oder -phenyl kann beispielsweise 3-(Ethylendioxypropyl) oder 3,4-Methylendioxyphenyl sein.

Sinngemäss lassen sich beispielsweise auch alle mit obiger Aufstellung nicht umfassten nachstehend genannten 1,3-Diketone in Form ihrer Zink-Chelat-Form als organische Zinkverbindungen einsetzen.

Die Polymerzusammensetzungen können als Komponente d) anorganische Ca-/Zn- und/oder Ba-/Zn-Verbindungen der Reihe der Carbonate, Chloride, Sulfate, Oxide, Hydroxide, der basischen Oxide und Mischoxide enthalten. Bevorzugt sind Calcium/Zink-Verbindungen.

Weiterhin können organische Ca-/Zn- oder Ba-/Zn-Verbindungen als Komponente d) verwendet werden, beispielsweise solche aus der Reihe der aliphatischen $C_1$-$C_{22}$-Carboxylate, der olefinischen $C_2$-$C_{22}$-Carboxylate, der aliphatischen $C_2$-$C_{22}$-Carboxylate, die mit wenigstens einer OH-Gruppe substituiert sind, der cyclischen und bicyclischen Carboxylate mit 5-22 C-Atomen, der aromatischen $C_6$-$C_{22}$-Carboxylate, der mit wenigstens einer OH-substituierten aromatischen $C_6$-$C_{22}$-Carboxylate, der $C_1$-$C_{16}$-alkylsubstituierten Phenylcarboxylate, der Phenyl-$C_1$-$C_{16}$-alkylcarboxylate, der $C_6$-$C_{18}$-Phenolate, der $C_5$-$C_{26}$-Chelate von 1,3-Diketonen oder β-Ketocarbonsäureestern, der Dehydracetsäure und deren Derivaten, der Mercaptide auf der Basis von Marcaptocarbonsäureestern, der Glycinate, Phosphate, Phosphite, Phosphonite, Phosphonate, der Partialester von Phosphonaten, der Sulfonate und Sulfinate.

Die Komponente d) der erfindungsgemässen Zusammensetzung ist besonders bevorzugt ein Zn-, Ca-/Zn- oder Ba-/Zn-Carboxylat. Bei den Carboxylaten handelt es sich bevorzugt um Salze von Carbonsäuren mit 7 bis 20 C-Atomen, z.B. Benzoate, Alkanoate oder Alkenoate, bevorzugt Stearate, Oleate, Laurate, Palmitate, Hydroxystearate oder 2-Ethylhexanoate. Besonders bevorzugt sind Octoate, Stearate, Caprylate, Oleate oder p-tert-Butylbenzoate.

Gemische aus Ba/Zn- oder Ca/Zn-Carboxylaten werden als Komponente d) besonders bevorzugt, wobei die Ca/Zn-Carboxylate ganz besonders bevorzugt ist.

Zinkoctoat oder Zinkcaprylat ist als Komponente d) ebenfalls besonders bevorzugt.

Bedeutet die Komponente d) ein Ca-/Zn- oder Ba-/Zn-Phenolat, so handelt es sich insbesondere um $C_7$-$C_{20}$-Alkylphenolate, beispielsweise Nonylphenolat.

Vorliegende Zusammensetzungen können auch weitere Stabilisatoren oder Stabilisatorengemische enthalten, welche die Verarbeitungs- und Gebrauchseigenschaften solcher Zusammensetzungen und der daraus hergestellten Gegenstände verbessern.

Zu solchen Stabilisatoren gehören die Mg-, Al-, Mg-/Al- und Mg-/Zn-Verbindungen, wobei die für anorganische und organische Zinkverbindungen genannten Einzelverbindungen in Frage kommen. Dabei soll jeweils anstelle des Zinks die Bedeutung von Mg-, Al-, Mg-/Al- oder Mg-/Zn- gelesen werden.

Als weitere Stabilisatoren können fallweise an sich bekannte Verbindungen, wie 1,3-Diketone angewendet werden.

Die 1,3-Diketone können die allgemeine Formel II

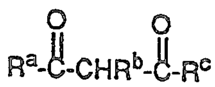

(II)

aufweisen, wobei

$R^a$ Alkyl mit 1 bis 22 C-Atomen, $C_5$-$C_{10}$-Hydroxyalkyl, Alkenyl mit 2 bis 22 C-Atomen, Phenyl, mit 1 bis 3 Gruppen der Reihe —OH, $C_1$-$C_4$-Alkyl, $C_1$- bis $C_4$-Alkoxy oder Halogen substituiertes Phenyl, Phenyl-$C_1$-$C_4$-alkyl, eine Gruppe der Formel

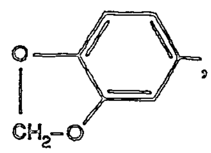

Cycloalkyl mit 5 bis 12 Ring-C-Atomen, oder mit

1 bis 3 $C_1$-$C_4$-Alkylgruppen substituiertes Cycloalkyl mit 5 bis 12 Ring-C-Atomen ; $R^c$ Alkyl mit 1 bis 22 C-Atomen, $C_5$-$C_{10}$-Hydroxyalkyl, Alkenyl mit 2 bis 22 C-Atomen, Phenyl, mit 1 bis 3 Gruppen der Reihe —OH, $C_1$-$C_4$-Alkyl, $C_1$- bis $C_4$-Alkoxy oder Halogen substituiertes Phenyl oder Phenyl-$C_1$-$C_4$-alkyl, eine Gruppe der Formel

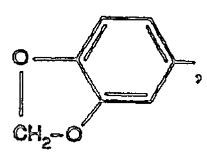

Cycloaklyl mit 5 bis 12 Ring-C-Atomen oder mit

1 bis 3 $C_1$ bis $C_4$-Alkylgruppen substituiertes Cycloalkyl mit 5 bis 12 Ring-C-Atomen und $R^b$ —H, Alkyl mit 1 bis 18 C-Atomen, Alkenyl mit 2 bis 12 C-Atomen, Phenyl, $C_1$-$C_4$-Alkyl substituiertes Phenyl, Phenyl-$C_1C_4$-alkyl, oder eine Gruppe der Formel

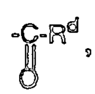

wobei $R^d$ —$CH_3$, —$C_2H_5$ oder Phenyl bedeutet, darstellen, oder worin $R^a$ und $R^b$ zusammen die Bedeutung eines Tetramethylenrestes oder eines Tetramethylenrestes, der mit einem Benzorest anelliert ist, aufweisen oder $R^a$ und $R^c$ zusammen die Bedeutung eines Trimethylenrestes oder eines mit 1 bis 3 $C_1$-$C_4$-Alkylgruppen substituierten Trimethylenrestes aufweisen oder $R^a$ und $R^c$ zusammen die Bedeutung eines Trimethylenrestes aufweisen, und eine Verbindung der Formel IIa bilden,

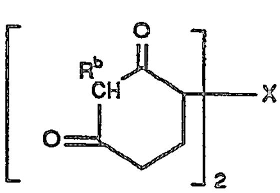

(IIa),

wobei $R^b$ die genannte Bedeutung hat und X Alkylen mit 1 bis 4 C-Atomen bedeutet.

$R^a$ und $R^c$ als Alkyl mit 1 bis 22 C-Atomen kann beispielsweise Methyl, Ethyl, Propyl, n-Butyl, tert.-Butyl, Pentyl, Hexyl, 2-Ethylhexyl, Nonyl, Decyl, Undecyl, Dodecyl, Tridecyl, Octadecyl oder Eicosyl sein, $R^b$ als Alkyl mit 1 bis 18 C-Atomen kann beispielsweise obige Bedeutung ohne Eicosyl haben.

Beispiele von $C_5$-$C_{10}$-Hydroxyalkyl für $R^a$ und $R^c$ sind 5-Hydroxypentyl, 6-Hydroxyethyl oder 7-Hydroxyheptyl.

Beispiele für $R^a$ und $R^c$ als Alkenyl mit 2 bis 22 C-Atomen sind Vinyl, Propenyl, Allyl, Butenyl, Methallyl, Hexenyl, Decenyl oder Heptadecenyl. Entsprechende Beispiele für $R^b$ als Alkenyl mit 2 bis 12 C-Atomen lassen sich sinngemäss obiger Aufzählung entnehmen.

Bei den Phenylgruppen, die mit vorzugsweise ein bis drei Gruppen aus der Reihe —OH, $C_1$-$C_4$-Alkyl, $C_1$-$C_4$-Alkoxy oder Halogen substituiert sind, wie für $R^a$ und $R^c$ erwähnt, kann es sich um 4-Hydroxyphenyl-, um 4-Hydroxy-3,5-di-$C_1$-$C_4$-alkylphenyl, wobei $C_1$-$C_4$-Alkyl beispielsweise Methyl oder t-Butyl ist, um Methylphenyl, Dimethylphenyl, Ethylphenyl, n-Butylphenyl, tert.-Butylphenyl, Methyl-tert.-butylphenyl, di-tert.-Butylphenyl, um Methoxy oder Ethoxyphenyl oder um Monochlorphenyl handeln.

Bedeutet $R^b$ $C_1$-$C_4$-Alkyl substituiertes Phenyl so sind damit z.B. Methylphenyl, Ethylphenyl oder tert.-Butylphenyl umfasst.

Die Bedeutung von Phenyl-$C_1$-$C_4$-alkyl für $R^a$, $R^b$ und $R^c$ ist beispielsweise Benzyl oder Methylbenzyl.

$R^a$ und $R^c$ können auch Cycloalkyl mit 5 bis 12 Ring-C-Atomen oder mit 1 bis 3 $C_1$-$C_4$-Alkylgruppen substituiertes Cycloalkyl mit 5 bis 12 Ring-C-Atomen bedeuten. Beispiele dafür sind Cyclopentyl, Cycloheptyl, Cyclobutyl, Cyclononyl, Cyclododecyl usw., sowie Methylcyclohexyl, Dimethylcyclohexyl, Trimethylcyclohexyl, tert.-Butylcyclohexyl.

Beispiele für 1,3-Diketone sind :

Dehydroacetsäure, Dehydropropionylacetsäure, Dehydrobenzoylacetsäure, Cyclohexan-1,3-dion, Dimedon, 2,2'-Methylenebiscyclohexan-1,3-dion, 2-Benzylcyclohexan-1,3-dion, Acetyltetralon, Palmitoyltetralon, Stearoyltetralon, Benzoyltetralon, 2-Acetylcyclohexanon, 2-Benzoylcyclohexanon, 2-Acetyl-cyclohexane-1,3-dion, Benzoyl-p-chlorobenzoylmethan, Bis-(4-methylbenzoyl)methan, Bis-(2-hydroxybenzoyl)methan, Benzoylaceton, Tribenzoylmethan, Diacetylbenzoylmethan, Stearoylbenzoylmethan, Palmitoylbenzoylmethan, Lauroylbenzoylmethan, Dibenzoylmethan, 4-Methoxybenzoylbenzoylmethan, Bis-(4-methoxybenzoyl)methan, Bis-(4-chlorobenzoyl)methan, Bis-(3,4-methylenedioxybenzoyl)methan, Benzoylacetyloctylmethan, Benzoylacetylphenylmethan, Stearoyl-4-methoxy-benzoylmethan, Bis-(4-t-butylbenzoyl)methan, Butanoylaceton, Heptanoylaceton, Distearoylmethan, Acetylaceton, Stearoylaceton, Palmitoylaceton, Lauroylaceton, Benzoylformylmethan, Benzoylphenylacetylmethan, Bis-(cyclohexanoyl)methan oder Di-pivaloylmethan.

Als Costabilisatoren verwendbare 1,3-Diketoverbindungen sind auch jene, die in der DE-B 2 600 516 und der EP-A 35 268 beschrieben sind, z.B. solche der im Patentanspruch der DE-B 2 600 516 angegebenen Formel. Andere 1,3-Diketoverbindungen sind Benzoylstearoyl-methan, 2-Benzoylacetessigsäurealkyl(z.B. ethyl)-ester und Triacylmethane.

Weitere anwendbare 1,3-Diketoverbindungen haben die Formel IIb

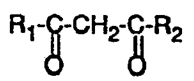

(IIb),

worin $R_1$ $C_1$-$C_{10}$-Alkyl, $C_5$-$C_{10}$-Hydroxyalkyl, Phenyl, Hydroxyphenyl, $C_7$-$C_{10}$-Phenylalkyl oder am Phenylring durch eine OH-Gruppe substituiertes $C_7$-$C_{10}$-Phenylalkyl ist und $R_2$ $C_5$-$C_{10}$-Hydroxyalkyl, Hydroxyphenyl oder am Phenylring durch eine OH-Gruppe substituiertes $C_7$-$C_{10}$-Phenylalkyl darstellt, mit der Bedingung, dass $R_2$ verschieden von Hydroxyphenyl ist, wenn $R_1$ Phenyl oder Hydroxyphenyl bedeutet.

$R_1$ bedeutet als $C_1$-$C_{10}$-Alkyl zum Beispiel Methyl, Ethyl, n-Propyl, Isopropyl, n-Butyl, tert-Butyl, n-Pentyl, n-Hexyl, n-Heptyl, n-Octyl oder n-Decyl. $C_1$-$C_4$-Alkyl, insbesondere Methyl und tert-Butyl, ist bevorzugt.

Beispiele für $R_1$ und $R_2$ als $C_5$-$C_{10}$-Hydroxyakyl sind 5-Hydroxypentyl, 1,1-Dimethyl-3-hydroxypropyl, 6-Hydroxyhexyl, 8-Hydroxyoctyl und 10-Hydroxydecyl. 5-Hydroxypentyl, 6-Hydroxyhexyl und 7-Hydroxyheptyl sind bevorzugt. Vorzugsweise befindet sich die Hydroxyalkylgruppe nicht in $\alpha$-Stellung. $R_2$ bedeutet insbesondere eine Gruppe der Formel —$(CH_2)_n$-OH, worin n eine ganze Zahl von 5 bis 7 darstellt. Von besonderem Interesse ist $R_2$ als 5-Hydroxypentyl.

Bedeuten $R_1$ und $R_2$ Hydroxyphenyl, so kann sich die OH-Gruppe in ortho-, meta- oder para-Stellung befinden. o-Hydroxyphenyl ist bevorzugt.

Beispiele für $R_1$ als $C_7$-$C_{10}$-Phenylakyl sind Benzyl und 2-Phenylethyl.

$R_1$ und $R_2$ bedeuten als $C_7$-$C_{10}$-Phenylalkyl, welches am Phenylring durch eine OH-Gruppe substituiert ist, z.B. (2-Hydroxyphenyl)methyl, (3-Hydroxyphenyl)methyl, (4-Hydroxyphenyl)methyl, 2-(2-Hydroxyphenyl)ethyl

und 2-(4-Hydroxyphenyl)ethyl.

Innerhalb dieser Stabilisatorgruppe sind Verbindungen bevorzugt mit der obigen Formel IIb, worin $R_1$ $C_1$-$C_{10}$-Akyl, $C_5$-$C_{10}$-Hydroxyakyl, Phenyl, Hydroxyphenyl, $C_7$-$C_{10}$-Phenylalkyl oder am Phenylring durch eine OH-Gruppe substituiertes $C_7$-$C_{10}$-Phenylalkyl ist und $R_2$ $C_5$-$C_{10}$-Hydroxyalkyl, Hydroxyphenyl oder am Phenylring durch eine OH-Gruppe substituiertes $C_7$-$C_{10}$-Phenylalkyl darstellt, mit der Bedingung, dass $R_2$ verschieden von Hydroxyphenyl ist, wenn $R_1$ Phenyl oder Hydroxyphenyl bedeutet.

Besonders bevorzugt sind Verbindungen obiger Formel IIb worin $R_1$ $C_1$-$C_{10}$-Alkyl, $C_5$-$C_{10}$-Hydroxyalkyl oder Phenyl bedeutet und $R_2$ $C_5$-$C_{10}$-Hydroxyalkyl oder Hydroxyphenyl ist, oder ganz besonders bevorzugt worin $R_1$ $C_1$-$C_4$-Alkyl oder Phenyl bedeutet und $R_2$ $C_5$-$C_7$-Hydroxyalkyl oder Hydroxyphenyl ist, ferner worin $R_2$ eine Gruppe $-(CH_2)_n$-OH bedeutet, wobei n eine ganze Zahl von 5 bis 7 darstellt.

Weitere Beispiele besonders bevorzugter Verbindungen obiger Formel IIb sind solche, worin $R_1$ Methyl, Butyl oder Phenyl ist und $R_2$ 5-Hydroxypentyl, 6-Hydroxyhexyl, 7-Hydroxyheptyl oder ortho-Hydroxyphenyl darstellt.

Namentlich zu erwähnen sind die bevorzugten Verbindungen der Formel IIb

Stearoylbenzoylmethan, Dibenzoylmethan, 1-Phenyl-8-hydroxyoctan-1,3-dion, 1-t-Butyl-8-hydroxyoctan-1,3-dion, 1-Methyl-8-hydroxyoctan-1,3-dion oder 1-(o-Hydroxyphenyl)butan-1,3-dion.

Weiter geeignete Verbindungen haben die Formel IIc

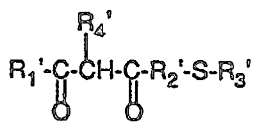

(IIc)

worin $R_1'$ und $R_3'$ unabhängig voneinander $C_1$-$C_{12}$-Alkyl, Phenyl, durch ein bis drei $C_1$-$C_{12}$-Alkylgruppen substituiertes Phenyl, $C_7$-$C_{10}$-Phenylalkyl oder durch ein bis drei $C_1$-$C_{12}$-Alkylgruppen substituiertes $C_7$-$C_{10}$-Phenylalkyl und $R_1'$ zusätzlich $-R_2'$-S-$R_3'$ bedeutet, $R_2'$ $C_1$-$C_{10}$-Alkylen darstellt und $R_4'$ Wasserstoff, $C_2$-$C_5$-Alkoxycarbonyl oder $C_2$-$C_5$-Alkanoyl ist. Weitere Ausführungen dazu, Beispiele und Bevorzugungen sind der EP 307 358 zu entnehmen.

Zweckmässig sind Zusammensetzungen, wie vorstehend beschrieben, enthaltend, bezogen auf 100 Gew.-Teile Zusammensetzung,

0,0001 bis 8 Gew.-Teile Treibmittel oder Schäumungsmittel,

0,01 bis 3,0 Gew.-Teile an sterisch gehinderten Aminen, und

0,01 bis 8 Gew.-Teile an Zinkverbindung, Ca-/Zn- oder Ba-/Zn-Verbindung.

Bevorzugte Mengenbereiche für die Treibmittel oder Schäumungsmittel sind 0,01 bis 5 Gew.-Teile, besonders bevorzugt 0,1 bis 3 Gew.-Teile und ganz besonders bevorzugt 0,1 bis 2 Gew.-Teile, jeweils bezogen auf 100 Gew.-Teile Zusammensetzung.

Bevorzugte Mengenbereiche für die sterisch gehinderten Amine in der Zusammensetzung sind 0,05 bis 1,0 Gew.-Teile, bezogen auf 100 Gew.-Teile Zusammensetzung. Besonders bevorzugt sind 0,1 bis 0,5 Gew.-Teile.

Bevorzugte Mengenbereiche für die Zinkverbindungen, Ca-/Zn- oder Ba-/Zn-Verbindung in der Zusammensetzung sind 0,05 bis 3 Gew.-Teile, besonders bevorzugt 0,1 bis 1,5 Gew.-Teile und insbesondere 0,5-1,0 Gew.-Teile, jeweils bezogen auf 100 Gew.-Teile Zusammensetzung.

Bevorzugte Mengenbereiche für den sogenannten Kicker in der Zusammensetzung sind 0,01 bis 5 Gew.-Teile, besonders bevorzugt 0,05 bis 3 Gew.-Teile, bezogen auf 100 Gew.-Teile Zusammensetzung.

Falls die Zusammensetzung auch ein 1,3-Diketon enthält, so enthält sie dieses bevorzugt in einer Menge von 0,05 bis 5 Gew.-Teilen, insbesondere 0,1 bis 1 Gew.-Teilen, bezogen auf 100 Gew.-Teile Zusammensetzung.

Das chlorhaltige Polymer kann einen Weichmacher enthalten.

Als Weichmacher kommen beispielsweise solche aus den folgenden Gruppen in Betracht:

A) Phthalate (Phthalsäureester) Beispiele für solche Weichmacher sind Dimethyl-, Diethyl-, Dibutyl-, Dihexyl-, Di-2-ethylhexyl-, Di-n-octyl-, Di-iso-octyl-, Di-iso-nonyl-, Di-iso-decyl-, Di-iso-tridecyl-, Dicyclohexyl-, Di-methylcyclohexyl-, Dimethylglycol-, Dibutylglycol-, Benzylbutyl- und Diphenyl-phthalat sowie Mischungen von Phthalaten wie $C_7$-$C_9$- und $C_9$-$C_{11}$-Alkylphthalate aus überwiegend linearen Alkoholen, $C_6$-$C_{10}$-n-Alkylphthalate und $C_8$-$C_{10}$-n-Alkylphthalate. Bevorzugt sind davon Dibutyl-, Dihexyl-, Di-2-ethylhexyl-, Di-n-octyl-, Di-iso-octyl-, Di-iso-nonyl-, Di-iso-decyl-, Di-iso-tridecyl- und Benzylbutyl-phthalat sowie die genannten Mischungen von Alkylphthalaten. Besonders bevorzugt ist Di-2-ethylhexylphthalat (DOP).

B) Ester aliphatischer Dicarbonsäuren, insbesondere Ester von Adipin-, Azelain- und Sebazinsäure Beispiele für solche Weichmacher sind Di-2-ethylhexyladipat, Di-isooctyladipat (Gemisch), Di-iso-nonyladipat (Gemisch), Di-iso-decyladipat (Gemisch), Benzylbutyladipat, Benzyloctyladipat, Di-2-ethylhexylazelat, Di-2-ethylhexylsebacat und Di-iso-decylsebacat (Gemisch). Bevorzugt sind Di-2-ethylhexyladipat und Di-iso-octyladipat.

C) Trimellithsäureester, beispielsweise Tri-2-ethylhexyltrimellithat, Tri-iso-decyltrimellithat (Gemisch), Tri-iso-tridecyltrimellithat, Tri-iso-octyltrimellithat (Gemisch) sowie Tri-$C_6$-$C_8$-alkyl, Tri-$C_6$-$C_{10}$-alkyl-, Tri-$C_7$-$C_9$-alkyl- und Tri-$C_9$-$C_{11}$-alkyl-trimellithate. Die letztgenannten Trimellithate entstehen durch Veresterung der Trimellithsäure mit den entsprechenden Alkanolgemischen. Bevorzugte Trimellithate sind Tri-2-ethylhexyl-trimellithat und die genannten Trimellithate aus Alkanolgemischen.

D) Polymerweichmacher

Eine Definition dieser Weichmacher und Beispiele für solche sind im "Plastics Additives Handbook", Herausgeber H. Gächter und H. Müller, Hanser Publishers, 1985, Seite 284, Kapitel 5.7.10 sowie in "PVC Technology", Herausgeber W.V. Titow, 4th. Ed., Elsevier Publ., 1984, Seiten 165-170 angegeben. Die gebräuchlichsten Ausgangsmaterialien für die Herstellung der Polyesterweichmacher sind : Dicarbonsäuren wie Adipin-, Phthal-, Azelain- und Sebacinsäure ; Diole wie 1,2-Propandiol, 1,3-Butandiol, 1,4-Butandiol, 1,6-Hexandiol, Neopentylglycol und Diethylenglykol ; Monocarbonsäuren wie Essig-, Capron-, Capryl-, Laurin-, Myristin-, Palmitin-, Stearin-, Pelargon-und Benzoesäure ; monofunktionelle Alkohole wie Isooctanol, 2-Ethylhexanol, Isodecanol sowie $C_7$-$C_9$-Alkanol- und $C_9$-$C_{11}$-Alkanolgemische. Besonders vorteilhaft sind Polyesterweichmacher aus den genannten Dicarbonsäuren und monofunktionellen Alkoholen.

E) Phosphorsäureester

Eine Definition dieser Ester ist im vorstehend genannten "Plastics Additives Handbook" auf Seite 271, Kapitel 5.7.2 zu finden. Beispiele für solche Phosphorsäureester sind Tributylphosphat, Tri-2-ethylbutylphosphat, Tri-2-ethylhexylphosphat, Trichlorethylphosphat, 2-Ethylhexyl-di-phenylphosphat, Kresyldiphenylphosphat, Triphenylphosphat, Trikresylphosphat und Trixylenylphosphat. Bevorzugt ist Tri-2-ethylhexyl-phosphat.

F) Chlorierte Kohlenwasserstoffe (Paraffine)

G) Kohlenwasserstoffe

H) Monoester, z.B. Butyloleat, Phenoxyethyloleat, Tetrahydrofurfuryloleat und Alkylsulfonsäureester.

I) Glycolester, z.B. Diglykolbenzoate.

Definitionen und Beispiele für Weichmacher der Gruppen F) bis I) sind den folgenden Handbüchern zu entnehmen :

"Plastics Additives Handbook", Herausgeber H. Gächter und H. Müller, Hanser Publishers, 1985, Seite 284, Kapitel 5.7.11 (Gruppe F)), und Kapitel 5.7.13 (Gruppe G)).

"PVC Technology", Herausgeber W.V. Titow, 4th. Ed., Elsevier Publishers, 1984, Seiten 171-173, Kapitel 6.10.2 (Gruppe F)), Seite 174, Kapitel 6.10.5 (Gruppe G)), Seite 173, Kapitel 6.10.3 (Gruppe H)) und Seiten 173-174, Kapitel 6.10.4 (Gruppe I)).

Besonders bevorzugt sind Weichmacher aus den Gruppen A) bis E), insbesondere A) bis C), vor allem die in diesen Gruppen als bevorzugt herausgestellten Weichmacher. Besonders günstig ist Di-2-ethylhexylphthalat (DOP).

Die Weichmacher können in einer Menge von beispielsweise 15 bis 100, zweckmässig 15 bis 70 und insbesondere 20 bis 50 Gew.-Teilen, bezogen auf 100 Gew.-Teile chlorhaltiges Polymerisat angewendet werden.

Die erfindungsgemässen Zusammensetzungen können auch weitere, für chlorhaltige Thermoplasten übliche Stabilisatoren enthalten, beispielsweise organische Phosphite. Solche Phosphite können etwa in einer Menge von 0,01-3, insbesondere 0,01-1,5, bevorzugt 0,1-0,6 Gew.-Teilen enthalten sein. Beispiele für derartige Phosphite sind etwa solche der Formeln

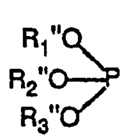

und

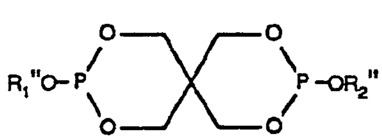

worin $R_1''$, $R_2''$ und $R_3''$ gleich oder verschieden sind und $C_6$-$C_{18}$-Alkyl, $C_6$-$C_{18}$-Alkenyl, einen substituierten oder unsubstituierten Phenylrest oder $C_5$-$C_7$-Cycloalkyl bedeuten.

Bedeuten $R_1''$, $R_2''$ und $R_3''$ $C_6$-$C_{18}$-Alkyl, so handelt es sich dabei z.B. um n-Hexyl, n-Octyl, n-Nonyl, Decyl, Dodecyl, Tetradecyl, Hexadecyl oder Octadecyl. Bevorzugt sind Alkylgruppen mit 8 bis 18 C-Atomen.

Als substituiertes Phenyl bedeuten $R_1''$, $R_2''$ und $R_3''$ beispielsweise Tolyl, Ethylphenyl, Xylyl, Cumyl, Cymyl, Kresyl, 4-Methoxyphenyl, 2,4-Dimethoxyphenyl, Ethoxyphenyl, Butoxyphenyl, p-n-Octylphenyl, p-n-Nonylphenyl oder p-n-Dodecylphenyl.

Besonders geeignete Phosphite sind Trioctyl-, Tridecyl-, Tridodecyl-, Tritetradecyl, Tristearyl-, Trioleyl-, Triphenyl-, Trikresyl-, Tris-p-nonylphenyl- oder Tricyclohexylphosphit und besonders bevorzugt sind die Aryl-Dialkyl- sowie die Alkyl-Diaryl-Phosphite, wie z.B. Phenyldidecyl-, (2,4-Di-tert.-butylphenyl)-di-dodecylphosphit, (2,6-Di-tert.-butylphenyl)-di-dodecylphosphit und die Dialkyl-und Diaryl-pentaerythrit-diphosphite, wie Distearylpentaerythrit-diphosphit.

Bevorzugte organische Phosphite sind Distearyl-pentaerythrit-diphosphit, Trisnonylphenylphosphit und Phenyl-didecyl-phosphit.

Ferner können in den erfindungsgemässen Zusammensetzungen weitere bekannte Costabilisatoren enthalten sein. Als derartige Costabilisatoren seien Aminocrotonsäureester, 2,4-Dihydroxybenzophenon, 2,4-Dihydroxy-4'-tert.-butylbenzophenon und Pyrrolderivate genannt. Beispielsweise können die Mengen solcher Costabilisatoren 0,01-1,5 und bevorzugt 0,1-1 Gew.-Teile, bezogen auf die Zusammensetzung, betragen.

Als Aminocrotonsäureester kommen insbesondere die Ester mit einwertigen geradkettigen $C_8$-$C_{20}$-, insbesondere $C_{12}$-$C_{18}$-Alkoholen und/oder mit 1,3-bzw. 1,4-Butandiol und/oder 1,2-Dipropylenglykol und/oder Thiodiethylenglykol in Betracht.

Als Pyrrol-Costabilisatoren sind jene besonders zu erwähnen, die in der EP-A 22 087 und der GB-A 2 078 761 beschrieben sind. Als Beispiel sei 2-Methyl-3-cyclohexyloxy-carbonyl-4-phenyl-1H-pyrrol genannt.

Ferner können die erfindungsgemässen Zusammensetzungen noch weitere fakultative Bestandteile enthalten, z.B. organische Antimonverbindungen, wie Antimon-tris-[isooctyl-thioglykolat].

Andere Stabilisatoren, die in den erfindungsgemässen Zusammensetzungen angewendet werden können, sind Polyole. Die anzuwendenden Mengen sind beispielsweise bis zu 3 Gew.-Teile, bezogen auf 100 Gew.-Teile Zusammensetzung, zweckmässig bis zu 2 Gew.-Teilen und vorzugsweise 0,01 bis 1 Gew.-Teil. Typische Beispiele von Polyolen sind Pentaerythritol, Dipentaerythritol, Trimethylolpropan, Ditrimethylolpropan, Tris-(2-hydroxyethyl)isocyanurat (THEIC), wobei letzteres bevorzugt ist, Sorbitol, Mannitol und Inositol.

Neben den genannten Stabilisatoren und Costabilisatoren können auch Epoxyverbindungen, wie 1,2-Epoxide, und Oxirane, in Mengen von beispielsweise bis zu 10 Gew.-Teilen, bezogen auf 100 Gew.-Teile Zusammensetzung, zweckmässig bis zu 5 Gew.-Teilen und vorzugsweise von 0,01 bis zu 2 Gew.-Teilen, angewendet werden. Beispiele dafür sind epoxidiertes Polybutadien, epoxidiertes Sojabohnenöl, epoxidiertes Leinsamenöl, epoxidiertes Fischöl, epoxidierter Talg, Methylbutyl- oder 2-Ethylhexylepoxystearat, Tris(epoxypropyl)isocyanurat, epoxidiertes Ricinusöl, epoxidiertes Sonnenblumenöl, 3-(2-Xenoxy)-1,2-epoxypropan, Bisphenol-A-polyglycidylether, Vinylcyclohexendiepoxyd, Dicyclopentadiendiepoxyd und 3,4-Epoxycyclohexylmethyl-3,4-epoxycyclohexancarboxylat.

Ferner können die erfindungsgemässen Zusammensetzungen übliche Antioxidantien, Lichtstabilisatoren und UV-Adsorber enthalten. Beispiele dafür sind :

1. Antioxidantien

1.1. Alkylierte Monophenole, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert.butyl-4-methoxymethylphenol, 2,6-Di-nonyl-4-methylphenol.

1.2. Alkylierte Hydrochinone, z.B. 2,6-Di-tert.butyl-4-methoxyphenol, 2,5-Di-tert.butyl-hydrochinon, 2,5-Di-tert.amyl-hydrochinon, 2,6-Diphenyl-4-octadecyloxyphenol.

1.3. Hydroxylierte Thiodiphenylether, z.B. 2,2'-Thio-bis-(6-tert.-butyl-4-methylphenol), 2,2'-Thio-bis-(4-octylphenol), 4,4'-Thio-bis-(6-tert.butyl-3-methylphenol), 4,4'-Thio-bis-(6-tert.butyl-2-methylphenol).

1.4. Alkyliden-Bisphenole, z.B. 2,2'-Methylen-bis-(6-tert.butyl-4-methylphenol), 2,2'-Methylen-bis-(6-tert.butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylenbis-(6-nonyl-4-methylphenol), 2,2'- Methylen-bis- (4,6-di-tert.butylphenol), 2,2'-Ethyliden-bis-(4,6-di-tert.butylphenol), 2,2'-Ethyliden-bis-(6-tert.butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert.-butylphenol), 4,4'-Methylen-bis-(6-tert.butyl-2-methylphenol), 1,1-Bis-(5-tert.butyl-4-hydroxy-2-methyl-phenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan,1,1 -Bis-(5-tert.butyl-4-hydroxy-2-methyl-phenyl)-3-n-dodecylmercaptobutan, Ethylenglycol-bis-[3,3-bis-(3'-tert.-butyl-4'-hydroxyphenyl)-butyrat], Bis-(3-tert.butyl-4-hydroxy-5-methyl-phenyl)-dicyclopentadien, Bis- [2-(3'-tert.butyl-2'-hydroxy-5'-methyl-benzyl)-6-tert.butyl-4-methyl-phenyl]-terephthalat.

1.5 Benzylverbindungen, z.B. 1,3,5-Tris-(3,5-di-tert.butyl-4-hydroxybenzyl)-2,4,6-tri-methylbenzol, Bis-(3,5-di-tert.butyl-4-hydroxybenzyl)-sulfid, 3,5-Di-tert.butyl-4-hydroxybenzyl-mercaptoessigsäure-isooctylester, Bis-(4-tert.butyl-3-hydroxy-2,6-dimethylbenzyl)dithiol-terephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocyanurat, 3,5-Di-tert.butyl-4-hydroxybenzyl-phosphonsäure-dioctadecylester, Ca-Salz des 3,5-Di-tert.butyl-4-hydroxybenzyl-phosphonsäure-monoethylester, 1,3,5-Tris-(3,5-dicyclohexyl-4-hydroxybenzyl)isocyanurat.

1.6. Acylaminophenole, z.B. 4-Hydroxy-laurinsäureanilid, 4-Hydroxy-stearinsäureanilid, 2,4-Bis-(octylmercapto)-6-(3,5-di-tert.butyl-4-hydroxyanilino)-s-triazin, N-(3,5-di-tert.-butyl-4-hydroxyphenyl)-carbaminsäureoctylester.

1.7. Ester der β-(3,5-Di-tert.butyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid.

1.8. Ester der β-(5-tert.Butyl-4-hydroxy-3-methylphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid.

1.9. Ester der β-(3,5-Dicyclohexyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid.

1.10. Amide der β-(3,5-Di-tert.butyl-4-hydroxyphenyl)-propionsäure, wie z.B. N,N'-Bis-(3,5-di-tert.butyl-4-hydroxyphenylpropionyl)-hexamethylendiamin, N,N'-Bis-(3,5-di-tert.-butyl-4-hydroxyphenylpropionyl)-trimethylendiamin, N,N'-Bis-(3,5-di-tert.butyl-4-hydroxyphenylpropionyl)-hydrazin.

2. UV-Absorber und Lichtschutzmittel

2.1. 2-(2'-Hydroxyphenyl)-benztriazole, wie z.B. das 5'-Methyl-, 3',5'-Di-tert.butyl-, 5'-tert.Butyl-, 5'-(1,1,3,3-Terramethylbutyl)-, 5-Chlor-3',5'-di-tert.butyl-, 5-Chlor-3'-tert.-butyl-5'-methyl-, 3'-sec.Butyl-5'-tert.butyl, 4'-Octoxy-, 3',5'-Di-tert.amyl-, 3',5'-Bis-(α,α-dimethylbenzyl)-Derivat.

2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

2.3. Ester von gegebenenfalls substituierten Benzoesäuren, wie z.B. 4-tert.Butyl-phenylsalicylat, Phenylsalicylat, Octylphenyl-salicylat, Dibenzoylresorcin, Bis-(4-tert.butylbenzoyl)-resorcin, Benzoylresorcin, 3,5-Di-tert.butyl-4-hydroxybenzoesäure-2,4-di-tert.butylphenylester, 3,5-Di-tert.butyl-4-hydroxybenzoesäurehexadecylester.

2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.

2.5. Nickelverbindungen, wie z.B. Nickelkomplexe des 2,2'-Thio-bis-[4-(1,1,3,3-tetramethylbutyl)-phenols], wie der 1 : 1- oder der 1 : 2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.

2.6. Oxalsäurediamide, wie z.B. 4,4'-Di-octyloxy-oxanilid, 2,2'-Di-octyloxy-5,5'-di-tert.-butyl-oxanilid, 2,2'-Di-dodecyloxy-5,5'di-tert.butyl-oxanilid, 2-Ethoxy-2'-ethyl-oxanilid, N,N'-Bis-(3-dimethylaminopropyl)-oxalamid, 2-Ethoxy-5-tert.butyl-2'-ethyloxanilid und dessen Gemisch mit 2-Ethoxy-2'-ethyl-5,4'-di-tert.butyl-oxanilid, Gemische von o-und p-Methoxy- sowie von o- und p-Ethoxy-di-substituierten Oxaniliden.

2.7. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis-(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin.

Je nach Verwendungszweck können in die erfindungsgemässen Zusammensetzungen ausserdem noch weitere übliche Zusätze eingearbeitet werden, wie z.B.

Füllstoffe und Verstärkungsmittel, wie z.B. Calciumcarbonat, Silikate, Glasfasern, Asbest, Talk, Kaolin, Glimmer, Bariumsulfat, Metalloxide und -hydroxide, Russ, Graphit ;

Gleitmittel, Pigmente, Flammschutzmittel, Antistatika, Verarbeitungshilfen (processing aids), Schlagzähigkeitsverbesserer (Polyacrylate) oder Biocide.

Die Zusammensetzungen können auch eine Verbindung aus der Reihe der Hydrotalcite enthalten, insbesondere Verbindungen mit der allgemeinen Formel I,

$$M^{2+}_{1-x}\cdot M^{3+}_{x}\cdot(OH)_2\cdot(A^{n-})_{x/n}\cdot mH_2O \quad (I),$$

wobei

$M^{2+}$ = Mg, Ca, Sr, Ba, Zn, Cd, Pb, Sn und/oder Ni ist,

$M^{3+}$ = Al, B oder Bi ist,

$A^n$ ein Anion mit der Valenz n darstellt,

n eine Zahl von 1-4 ist,

x eine Zahl von 0-0,5 ist,

m eine Zahl von 0-2 ist und

A = $OH^-$, $Cl^-$, $Br^-$, $I^-$, $ClO_4^-$, $HCO_3^-$, $CH_3COO^-$, $C_6H_5COO^-$, $CO_3^{2-}$-, $SO4^{2-}$, 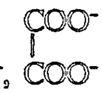
$(CHOHCOO)_2^{2-}$, $(CHOH)_4CH_2OHCOO^-$, $C_2H_4(COO)_2^{2-}$, $(CH_2COO)_2^{2-}$, $CH_3CHOHCOO^-$, $SiO_3^{2-}$, $SiO_4^{4-}$, $Fe(CN)_6^{3-}$, $Fe(CN)_6^{4-}$ oder $HPO_4^{2-}$ darstellt.

Andere Hydrotalcite, die eingesetzt werden können, sind Verbindungen mit der allgemeinen Formel Ia

$$M^{2+}_{x}Al_2(OH)_{2x+6nz}(A^{n-})_2\cdot mH_2O \quad (Ia)$$

wobei in vorliegender Formel Ia $M^{2+}$ wenigstens ein Metall aus der Reihe von Mg und Zn darstellt und Mg bevorzugt ist, $A^{n-}$ ein Anion, beispielsweise aus der Reihe von $CO_3^{2-}$,

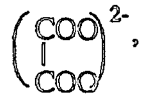

$OH^-$ und $S^{2-}$ ,darstellt, wobei n die Valenz des Anions ist, m eine positive Zahl, vorzugsweise von 0,5 bis 5, darstellt und x und z positive Zahlen darstellen, wobei x vorzugsweise 2 bis 6 ist und z kleiner als 2 ist.

Bevorzugt sind Polymerzusammensetzungen, wie oben beschrieben, enthaltend mindestens eine Verbindung aus der Reihe der Hydrotalcite, der allgemeinen Formel Ib

$$M^{2+}_{1-x}\cdot Al_x\cdot(OH)_2\cdot(A^{n-})_{x/2}\cdot H_2O \quad (Ib)$$

wobei $M^{2+}$ die Bedeutung von Mg oder einer festen Lösung von Mg und Zn hat, $A^{n-}$ für $CO_3^{2-}$ steht. x eine Zahl von 0 bis 0,5 ist und m eine Zahl von 0 bis 2 ist.

Beispiele solcher Hydrotalcite sind die Verbindungen der Formeln

$4MgO\ Al_2O_3\ CO_2\cdot 9H_2O$,

$4MgO\ Al_2O_3\ CO_2\cdot 6H_2O$,

$ZnO\ 3MgO\ Al_2O_3\ CO_2\cdot 8\text{-}9H_2O$ oder

$ZnO\ 3MgO\ Al_2O_3\ CO_2\cdot 5\text{-}6H_2O$.

Zweckmässige Mengenbereiche für Hydrotalcite, wie oben genannt, betragen 0,1 bis 3 Gew.-Teile, bevorzugt 0,3 bis 2 Gew.-Teile und insbesondere 0,4 bis 1 Gew.-Teile, jeweils bezogen auf 100 Gew.-Teile Zusammensetzung.

Vorliegende Erfindung umfasst auch die geschäumten Gegenstände, erhältlich durch Aufschäumen einer erfindungsgemässen Zusammensetzungen, wie vorstehend beschrieben.

Die Gegenstände können unter vielen weiteren Verwendungszwecken beispielsweise Rohre oder Profile, wie Türzargen, Rolladenkästen, Fensterbretter und Möbelteile, Dichtungsprofile, ferner Schuhsohlen, Puffer, Stossdämpfer, Matten, Bahnen, Felle, Blöcke, Auslegeware, Schaumkunstleder, Wand- und Fussbodenbeläge, Polstermaterialien und dergleichen sein.

Beispiele für erfindungsgemäss erhältliche geschäumte Gegenstände sind a) ein geschlossenzelliger Weich-PVC-Schaum der Dichte d von 0,05-1,0 g/cm³, verwendbar als hochelastisches Material in Turnmatten, als Stossschutzeinlage in Helmen, für die Dämpfung von Maschinenschwingungen und als Wand- und Bodenbeläge, b) ein offenzelliger Weich-PVC-Schaum, der Dichte d 0,07-0,33 g/cm³, verwendbar als ein Material in der Schallschluck-Technik und für atmende Polsterungen, c) ein Hart-PVC-Struckturschaum der Dichte d 0,5-1,0 g/cm³, verwendbar als warmformbare leichte Konstruktionsmaterialien für Innen- und Aussenbau, oder d) ein geschlossenzelliger Hart-PVC-Schaum der Dichte d 0,04-0,13 g/cm³, verwendbar als Sandwich-Kernmaterial, für Netz-Schwimmer und Rettungsflösse oder für Tiefkühlbehälter für Flüssiggase.

Beispiel 1 :

Für einen Hartschaum wird folgende Mischung zubereitet:

| | Gewichtsteile: |
|---|---|
| Suspensions-PVC mit K-Wert 58 | 100 |
| PVC Verarbeitungshilfe (processing aid) auf Basis von Polymethylmetacrylat | 8 |
| Kreide | 2 |
| Titandioxid-Pigment | 2 |
| Diisodecylphenylphosphit | 0,5 |
| Epoxidiertes Sojabohnenöl | 0,8 |
| Polyethylenwachs (äusseres Gleitmittel) | 0,3 |
| Glycerinmonooleat (inneres Gleitmittel) | 1,0 |
| Azodicarbonamid (chemisches Treibmittel zur Schaumbildung) | 0,5 |
| Calciumstearat | 0,8 |
| Zinkstearat | 2,0 |
| Sterisch gehindertes Amin (Beispiel 84 aus der Beschreibung) | 0,4 |

Die Mischung wird dem Brabender-Test unterzogen, wobei die Prüftemperatur 175°C beträgt und eine Drehzahl von 35 Upm eingehalten wird. Am Walzfell wird der Yellowness Index (YI) in Abhängigkeit der Zeit bestimmt.

Tabelle

| Zeit | 5' | 10' | 15' | 20' |
|---|---|---|---|---|
| YI | 16,6 | 23,1 | 40,1 | 65,1 |

Beispiel 2:

Für einen Weichschaum wird folgende Mischung zubereitet:

| | Gewichtsteile: |
|---|---|
| Feinteiliges Emulsionshomopolymerisat mit K-Wert 67 | 100 |
| 9,11-Phthalatweichmacher | 80 |

| | |
|---|---|
| Kalium-2-ethylhexanoat | 0,35 |
| Basisches Zink-2-ethylhexanoat | 0,9 |
| Aromatische Kohlenwasserstoffe (Lösungsmittel) | 0,5 |
| Tripropylenglykolmonomethylether | 0,25 |
| Sterisch gehindertes Amin (Beispiel 84 aus der Beschreibung) | 0,1 |
| Azodicarbonamid (chemisches Treibmittel zur Schaumbildung) | 4 |

Die Mischung wird folgenden Testverfahren unterworfen :

Dem Mathis-Test, wobei die Mischung auf einer Unterlage ausgegossen wird und bei 160°C wähend 30 Sekunden angeliert. Das entstehende Fell wird bei 200°C hitzebehandelt, wobei nach 60 Sekunden ein voll aufgeschäumtes Material in guter Schaumstruktur erhalten wird.

In einem anderen Test mit dem Mathis-Thermotakter wird die angelierte Mischung bei 190°C statisch belastet, wobei das entstehende Schaummaterial nach 28 Minuten Wärmebelastung einen deutlichen Farbumschlag nach braun zeigt.

Beispiel 3 :

Es wird eine Mischung gemäss Beispiel 2 hergestellt, wobei anstelle von 0,1 Gew.-Teilen 0,3 Gew.-Teile des sterisch gehinderten Amins verwendet werden. Bei den gleichen Testverfahren erhält man nach 60 Sekunden ein voll aufgeschäumtes Material guter Schaumstruktur und bei Wärmebelastung tritt der deutliche Farbumschlag nach braun nach 32 Minuten auf.

## Ansprüche

1. Zusammensetzungen, enthaltend
   a) wenigstens ein chlorhaltiges Polymerisat
   b) wenigstens ein Treibmittel oder Schäumungsmittel
   c) wenigstens ein sterisch gehindertes Amin und
   d) wenigstens eine Zink-, Calcium/Zink- und/oder Barium/Zink-Verbindung.

2. Zusammensetzung nach Anspruch 1, enthaltend als b) Azodicarbonamid.

3. Zusammensetzung nach Anspruch 1, enthaltend als c), wenigstens eine Verbindung, die mindestens eine Gruppe der Formel III

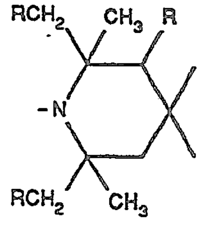

(III)

enthält, worin R Wasserstoff oder Methyl bedeutet.

4. Zusammensetzung nach Anspruch 1, enthaltend als c), wenigstens eine oligomere oder polymere Verbindung, deren wiederkehrende Struktureinheit einen 2,2,6,6-Tetraalkylpiperidinrest der Formel III enthält, insbesondere Polyester, Polyäther, Polyamide, Polyamine, Polyaminotriazine, Poly(meth)acrylate, Poly(meth)acrylamide und deren Copolymere, die solche Reste enthalten.

5. Zusammensetzungen nach Anspruch 1, enthaltend als c) wenigstens eine Verbindung der folgenden Formeln, wobei m eine Zahl von 2 bis etwa 200 bedeutet

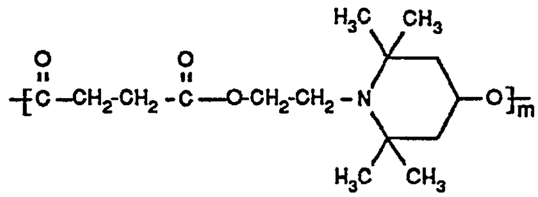 ,

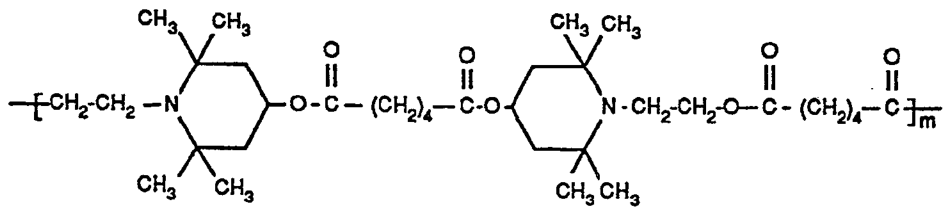 ,

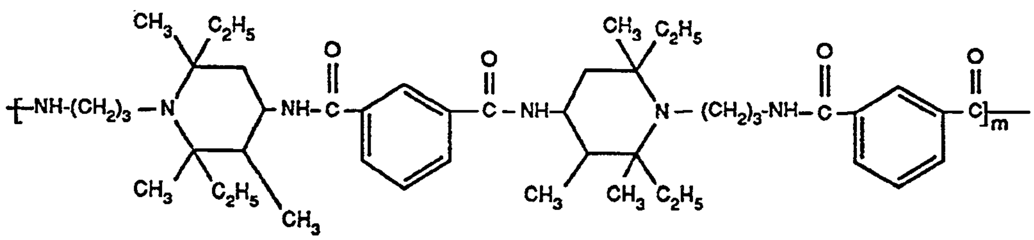 ,

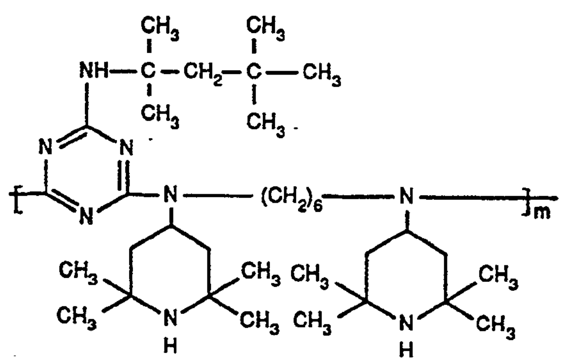 ,

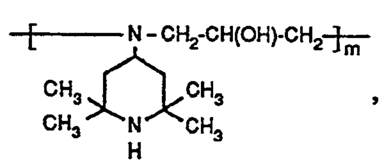 ,

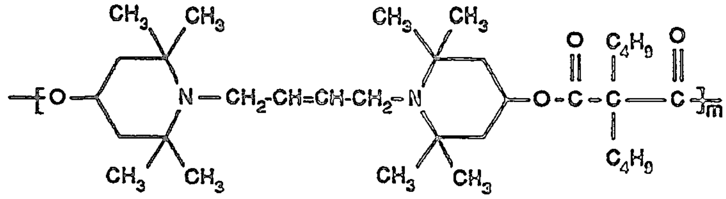

,

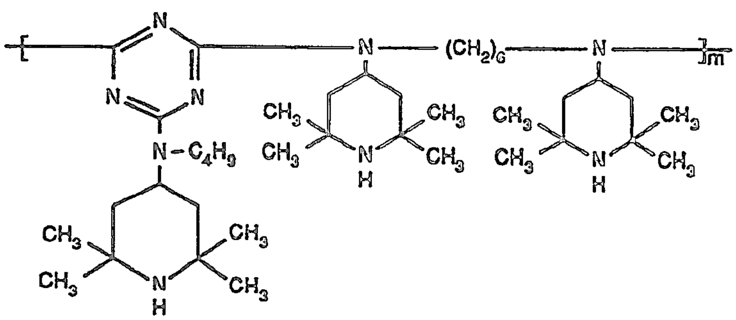

,

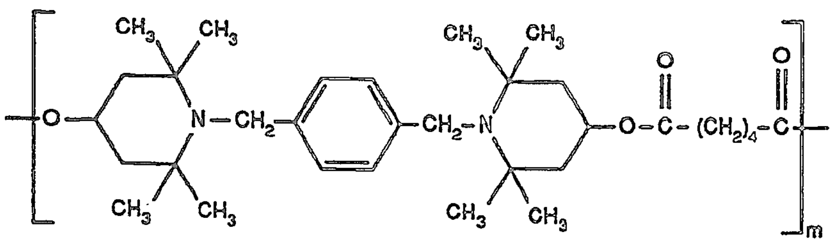

,

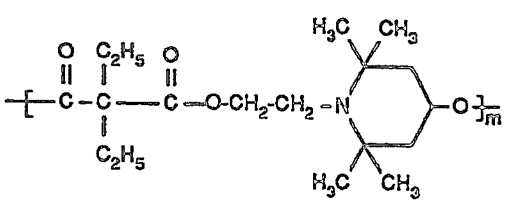

,

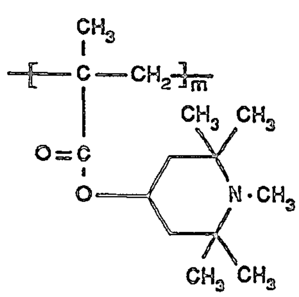

,

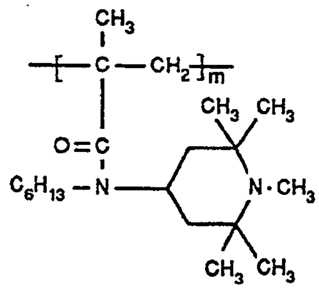

,

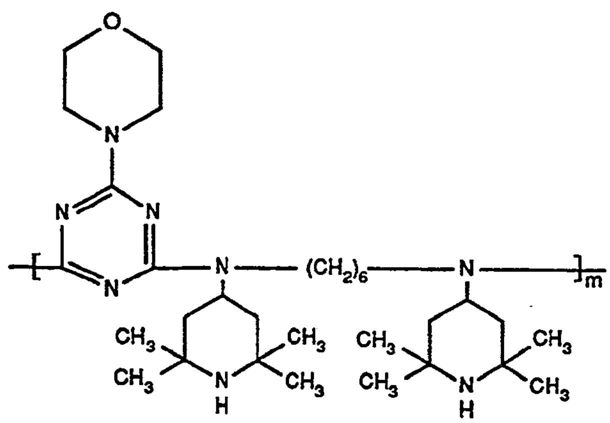

,

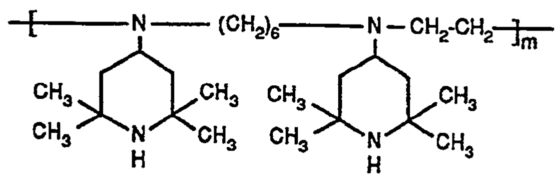

oder

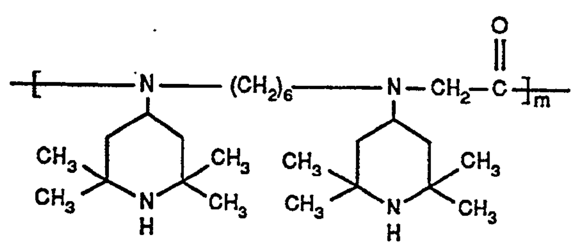

.

6. Zusammensetzungen nach Anspruch 1, enthaltend als c) ein sterisch gehindertes Amin der Formel

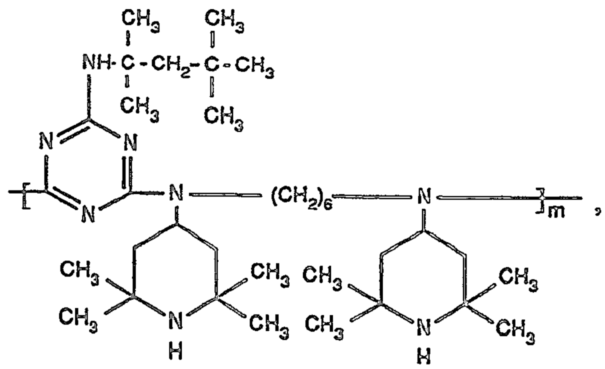

wobei m eine Zahl von 2 bis etwa 200 bedeutet.

7. Zusammensetzung nach Anspruch 1, enthaltend als zusätzliche Komponente wenigstens eine Alkaliverbindung als Kicker.

8. Zusammensetzung nach Anspruch 7, enthaltend Kalium-2-ethylhexanoat.

9. Zusammensetzung nach Anspruch 1, enthaltend als zusätzliche Komponente ein 1,3-Diketon.

10. Zusammensetzung nach Anspruch 1, enthaltend als zusätzliche Komponente ein organisches Phosphit.

11. Zusammensetzung nach Anspruch 1, enthaltend als zusätzliche Komponente eine Epoxyverbindung.

12. Geschäumter Gegenstand, erhältlich durch Aufschäumen einer Zusammensetzung nach Anspruch 1.

Europäisches Patentamt

# EUROPÄISCHER RECHERCHENBERICHT

Nummer der Anmeldung

EP 90 81 0923

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| E | EP-A-399805 (SUMITOMO CHEMICAL COMPANY, LIMITED) * Seite 4, Zeile 5 - Seite 5, Zeile 53; Ansprüche * | 1 | C08K5/00<br>C08J9/10<br>C08L57/08<br>//(C08K5/00,<br>5:3435,5:09) |
| X | EP-A-290386 (CIBA-GEIGY AG) *Ansprüche; Seite 3, Zeilen 9-13; Seite 6, Zeilen 15-17* | 1 | |
| A | EP-A-155912 (CIBA-GEIGY AG) | | |
| A | EP-A-119961 (CIBA-GEIGY AG) | | |
| A | DATABASE WPIL, Nr. 88-240800, Derwent Publications Ltd., London, GB; & RO-A-94 302 (Inst. Pielarie Ical.) 30-04-1988 * Zusammenfassung * | | |

| RECHERCHIERTE SACHGEBIETE (Int. Cl.5) |
|---|
| C08K<br>C08J<br>C08L |

Der vorliegende Recherchenbericht wurde für alle Patentansprüche erstellt

| Recherchenort | Abschlußdatum der Recherche | Prüfer |
|---|---|---|
| DEN HAAG | 07 MAERZ 1991 | DE LOS ARCOS Y E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPO FORM 1503 03.82 (P0403)